# EUROPÄISCHE PATENTSCHRIFT

(11) **EP 3 827 719 B1**
(45) Veröffentlichungstag und Bekanntmachung des Hinweises auf die Patenterteilung: **13.03.2024**
(21) Anmeldenummer: 19212345.3
(22) Anmeldetag: 28.11.2019
(51) Int. Cl.: A47K 3/16, B25H 7/00, G01B 11/00, G06T 7/521, G06T 17/00, E04F 21/00

(54) **EINBAUPROTOKOLLERSTELLUNGSEINRICHTUNG**
INSTALLATION PROTOCOL GENERATION DEVICE
DISPOSITIF D'ÉTABLISSEMENT DE PROTOCOLES D'INSTALLATION

(43) Veröffentlichungstag der Anmeldung: 02.06.2021
(73) Patentinhaber: poresta systems GmbH, 34537 Bad Wildungen (DE)
(72) Erfinder: EMDE, Christian, 34596 Bad Zwesten (DE); IGLHAUT, Karl, 34560 Fritzlar (DE); JAEGER, Jobst, 34537 Bad Wildungen (DE); RÖMER, Manfred, 34528 Borken (DE); RUMMEL, Lars, 34513 Waldeck (DE); WAGENFELDT, Jens, 34537 Bad Wildungen (DE)
(74) Vertreter: Maiwald GmbH

(56) Entgegenhaltungen:
- FR-A1- 2 745 167
- US-A1- 2016 291 160
- US-A1- 2019 323 823

## Beschreibung

### Gebiet der Erfindung

Die Erfindung betrifft die Erstellung von Einbauprotokollen. Die Erfindung betrifft eine Einbauprotokollerstellungseinrichtung, eingerichtet zur Erstellung eines Einbauprotokolls eines Wannenträgers, ein Installations- und Dokumentationssystem mit einer Einbauprotokollerstellungseinrichtung, die Verwendung einer Einbauprotokollerstellungseinrichtung zum Einbau eines Wannenträgers, ein Verfahren zum Erstellen eines Einbauprotokolls eines Wannenträgers, ein Programmelement und ein computerlesbares Medium.

### Hintergrund

Wannenträger werden verwendet, um eine aufzunehmende Wannenform im Bodenbereich und/oder im Bereich des umlaufenden Randes zu unterstützen. Entsprechend ist der Wannenträger insbesondere hinsichtlich seiner Längs- , Breiten- und Höhenerstreckung, insbesondere im Bereich des Wannenträgerrandes, angepasst an die entsprechende Maße der abzustützenden Wannenform.

Je nach Wannenform weist der Wannenträger andere Abmessungen auf, welche optimal an die verwendete Wannenform angepasst sein sollten.

US 2016/0291160 A1 beschreibt ein mobiles dreidimensionales Messgerät, welches einen Laserscanner nutzt.

### Zusammenfassung der Erfindung

Es ist eine Aufgabe der vorliegenden Erfindung, die Herstellung von flexibel einsetzbaren Wannenträgern zu ermöglichen und deren Einbau zu erleichtern.

Diese Aufgabe wird durch die Merkmale der unabhängigen Patentansprüche gelöst. Weiterbildungen der Erfindung ergeben sich aus den Unteransprüchen und der folgenden Beschreibung von Ausführungsformen.

Ein erster Aspekt betrifft eine Einbauprotokollerstellungseinrichtung, eingerichtet zur Erstellung eines Einbauprotokolls eines Wannenträgers, einer bodenebenen Dusche, eines Wannenmontage-Fußgestells, Wandelementen oder einer Ablaufmontagebox. Wandelemente sind zum Beispiel Elemente mit dekorativer Oberfläche aus HPL und einem wasserdichten Kern. Davon gibt es verschiedene Dekore und Ausführungsvarianten. Die Verbindung der Elemente untereinander erfolgt zum Beispiel durch eine passgenaue Nut und/oder Feder, die mit Fugenkleber verklebt wird. Der Begriff Wannenträger umfasst mindestens Badewannenträger und/oder Duschwannenträger. Die Einbauprotokollerstellungseinrichtung weist eine Sensorvorrichtung, eine Steuereinheit und eine Speichereinheit auf. Die Sensoreinrichtung ist eingerichtet zur Erfassung von geometrischen Einbaubedingungen des Umfelds der geplanten Einbauposition des Wannenträgers und zur Erfassung von Einbaudaten des danach eingebauten Wannenträgers. Die Steuereinheit ist eingerichtet zur Erstellung des Einbauprotokolls unter Verwendung der erfassten Einbaudaten. Die Speichereinheit ist eingerichtet zum Speichern des Einbauprotokolls.

Sensorvorrichtung, Steuereinheit und Speichereinheit können jeweils zusammenhängende Einheiten sein. Sie können aber auch verteilt angeordnet sein. So ist es beispielsweise möglich, dass die Speichereinheit zum einen Teil in einem Handgerät angeordnet ist, zum anderen Teil aber beispielsweise auch in einem Server. Die Sensorvorrichtung kann einen Sensor oder mehrere Sensoren aufweisen.

Gemäß einer Ausführungsform ist die Einbauprotokollerstellungseinrichtung als Handgerät ausgeführt oder weist zumindest ein Handgerät auf.

Gemäß einer weiteren Ausführungsform ist die Steuereinheit eingerichtet, unter Verwendung der geometrischen Einbaubedingungen des Umfelds der geplanten Einbauposition des Wannenträgers einen Bauplan und/oder einen Einbauablaufplan (Einbauanleitung) des Wannenträgers zu erstellen und auszugeben.

Gemäß einer weiteren Ausführungsform ist die Speichereinheit entfernt von der Sensorvorrichtung angeordnet. Weiterhin weist die Einbauprotokollerstellungseinrichtung eine Kommunikationsschnittstelle auf, eingerichtet zur Übermittlung des Einbauprotokolls an die Speichereinheit.

Gemäß einer weiteren Ausführungsform weist die Sensorvorrichtung einen Laserscanner und/oder eine Kamera auf.

Gemäß einer weiteren Ausführungsform weist die Einbauprotokollerstellungseinrichtung eine Ausgabeeinrichtung auf, wobei die Steuereinheit eingerichtet ist, unter Verwendung der geometrischen Einbaubedingungen des Umfelds der geplanten Einbauposition des Wannenträgers eine Einbauanweisung zu erstellen und über die Ausgabeeinrichtung auszugeben. Diese Einbauanweisung teilt dem Benutzer beispielsweise mit, welches Teil des Wannenträgersystems als nächstes an welchem Ort verbaut werden muss. Auch kann die Einbauanweisung Informationen darüber enthalten, wie bestimmte Teile des Wannenträgersystems angepasst werden müssten, beispielsweise indem Material entfernt wird.

Ein weiterer Aspekt betrifft ein Installations- und Dokumentationssystem mit einer oben und im Folgenden beschriebenen Einbauprotokollerstellungseinrichtung und einem externen Server, eingerichtet zum Speichern des Einbauprotokolls.

Ein nicht beanspruchter Aspekt betrifft einen mit einer oben und im Folgenden beschriebenen Einbauprotokollerstellungseinrichtung einzubauenden Wannenträger aus einem Hartschaumstoff, insbesondere einem Partikelschaumstoff, mit Seitenwänden und Stirnwänden, wobei der Wannenträger zufolge von mehrfach vorgesehenen Steckausnehmungen in seiner Länge und/oder Breite veränderbar gestaltet ist.

Ein weiterer nicht beanspruchter Aspekt betrifft zur Versandanordnung gestapelte Teile eines oben und im Folgenden beschriebenen Wannenträgers, wobei eine erstunterste Lage aus einer Seitenwand besteht, auf der als zweitunterste Lage eine zweite Seitenwand deckungsgleich angeordnet ist, wobei sich über der zweituntersten Lage zwei Stirnwände und ein oder mehrere Bodenabstützteile befinden oder wobei die zweite Seitenwand als oberste Lage angeordnet ist und die zwei Stirnwände und ein oder mehrere Bodenabstützteile sich in Höhenrichtung zwischen den zwei Seitenwänden befinden.

Ein weiterer Aspekt betrifft die Verwendung einer oben und im Folgenden beschriebenen Einbauprotokollerstellungseinrichtung zum Einbau eines Wannenträgers und zur Erstellung eines Einbauprotokolls des Wannenträgers.

Ein weiterer Aspekt betrifft ein Verfahren zum Erstellen eines Einbauprotokolls eines oben und im Folgenden beschriebenen Wannenträgers, bei dem geometrische Einbaubedingungen des Umfelds der geplanten Einbauposition des Wannenträgers und Einbaudaten des danach eingebauten Wannenträgers mittels einer Sensorvorrichtung erfasst werden, ein Einbauprotokoll unter Verwendung der erfassten Einbaudaten mittels einer Steuereinheit erstellt wird und dieses dann abgespeichert wird.

Ein weiterer Aspekt betrifft ein Programmelement, das, wenn es auf einer Steuereinheit einer oben und im Folgenden beschriebenen Einbauprotokollerstellungseinrichtung ausgeführt wird, die Einbauprotokollerstellungseinrichtung anleitet, die oben beschriebenen Schritte durchzuführen.

Ein weiterer Aspekt betrifft ein computerlesbares Medium, auf dem ein oben beschriebenes Programmelement gespeichert ist.

Das Computerprogramm kann beispielsweise in einem Arbeitsspeicher einer Datenverarbeitungseinrichtung, wie etwa eines Datenprozessors geladen und/oder gespeichert sein, wobei die Datenverarbeitungseinrichtung auch Teil einer Ausführungsform der vorliegenden Erfindung sein kann. Diese Datenverarbeitungseinrichtung kann dazu eingerichtet sein, Verfahrensschritte des oben beschriebenen Verfahrens durchzuführen. Die Datenverarbeitungseinrichtung kann ferner dazu eingerichtet sein, das Computerprogramm bzw. das Verfahren automatisch auszuführen und/oder Eingaben eines Benutzers auszuführen. Das Computerprogramm kann auch über ein Datennetzwerk, wie etwa das Internet, bereitgestellt und von einem solchen Datennetzwerk aus in den Arbeitsspeicher der Datenverarbeitungseinrichtung heruntergeladen werden. Das Computerprogramm kann auch eine Aktualisierung eines bereits vorhandenen Computerprogramms umfassen, wodurch das vorhandene Computerprogramm beispielsweise zum Ausführen des oben beschriebenen Verfahrens befähigt werden kann.

Das computerlesbare Speichermedium kann insbesondere, aber nicht notwendigerweise, ein nichtflüchtiges Medium sein, das sich insbesondere zum Speichern und/oder Verteilen eines Computerprogramms eignet. Das computerlesbare Speichermedium kann eine CD-ROM, eine DVD-ROM, ein optisches Speichermedium, ein Festkörpermedium oder ähnliches sein, das zusammen mit oder als Teil anderer Hardware geliefert wird. Zusätzlich oder alternativ dazu, kann das computerlesbare Speichermedium auch in anderer Form verteilt bzw. vertrieben werden, beispielsweise über ein Datennetzwerk, wie etwa das Internet, eine Cloud oder andere drahtgebundene oder drahtlose Telekommunikationssysteme. Hierzu kann das computerlesbare Speichermedium beispielsweise als ein oder mehrere Datenpakete ausgeführt sein.

Der Wannenträger ist zufolge von mehrfach vorgesehenen Steckausnehmungen in den Seitenwänden und/oder Steckausformungen an den Stirnwänden in seiner Länge und/oder Breite veränderbar gestaltet.

Zufolge der vorgeschlagenen Ausgestaltung ist der Wannenträger in handhabungstechnisch günstiger Weise hinsichtlich seiner Länge und/oder Breite und/oder Höhe bevorzugt vor Ort, das heißt bevorzugt im Zuge des Zusammenbaus zu einem Wannenträger, veränderbar beziehungsweise an die diesbezüglichen Längen- Breiten- und Höhenabmessungen der aufzunehmenden Wannenform anpassbar.

Zur Längen- und/oder Breitenänderung des Wannenträgers ist eine variable Zuordnung von Steckausformungen an den Stirnwänden zu Steckausnehmungen in den Seitenwänden möglich. Je nach Steckzuordnung ist hierdurch die Länge und/oder die Breite des Wannenträgers veränderbar, insbesondere bezüglich des die Wannenform aufnehmenden Bereichs des so geschaffenen Wannenträgers, weiter insbesondere entlang des im Nutzungszustand nach oben weisenden umlaufenden Auflagerandes des Wannenträgers.

So kann durch entsprechende Steckanordnung der Stirnwände zu den Seitenwänden die nutzbare Länge der Seitenwände und somit insgesamt des Wannenträgers gegenüber einer maximal nutzbaren Länge gekürzt sein, wobei jedoch die Seitenwände und/oder die Stirnwände jeweils für sich betrachtet ihre ursprüngliche Länge auch im Zusammenbau- und gegebenenfalls Nutzungszustand beibehalten können. Entsprechend können weiter die Seitenwände und/oder Stirnwände gegebenenfalls über die Wannenträgerkontur zur Aufnahme der Wannenform nach außen hinausragen. Auch können, wie auch bevorzugt, die Höhe des Wannenträgers sowie überstehende Wandabschnitte vor oder nach dem Zusammenbau abgeschnitten werden.

Als Trägermaterial wird bevorzugt ein Schaumstoff, nämlich geeigneter Weise ein Hartschaumstoff gewählt. Hartschaumstoff, insbesondere Partikelschaumstoff wie z.B. EPS, EPP, oder extrudierter Hartschaum, wie z.B. XPS oder PUR-Hartschaumstoff weist eine hohe Stabilität auf und ist auch am Einbauort als Wannenträger in handhabungsgünstig einfacher Weise ablängbar. Alternativ kann als Trägermaterial auch Hartschaumstoff aus expandierbaren oder extrudierbaren, nativen oder biobasierten Polymeren, wie z.B. CP, CAB oder PLA gewählt werden. Weiter können auch alternativ mit mineralischem Mörtel beschichtete, gewebearmierte Hartschaumplatten oder Platten aus nachwachsenden Rohstoffen, wie z.B. Platten aus gebundenen Holzfasern als Trägermaterial gewählt werden.

Hinsichtlich der durch Schneiden möglichen Gestaltung der Teile des Wannenträgers, also insbesondere der Seitenwände und/oder der Stirnwände, ist auch bevorzugt, dass eine weitere Variabilität hinsichtlich einer Höhenveränderung des Wannenträgers im Hinblick auf die Seitenwände und/oder Stirnwände hierdurch gegeben ist. Durch Schneiden in einer horizontalen Schnittebene kann die Höhe entsprechend günstig geändert werden. Hierbei ist weiter bevorzugt, dass diese möglichen Höhenänderungen durch Schneidausformungen, wie also im Aufbauzustand horizontal verlaufende Nuten oder Rinnen vorgegeben sind.

Hinsichtlich Wannenträger kann es sich um einen Wannenträger für eine Wannenform einer Badewanne handeln, es kann sich aber auch um einen Duschwannenträger handeln, in den also eine Wannenform für einen Duschplatz einsetzbar ist. Während bei einem Wannenträger für eine Badewanne in der Regel die hier auch vorzugsweise beschriebene langgestreckt rechteckige Gestaltung vorherrscht, kann insbesondere bei einem Duschwannenträger auch eine praktisch quadratische Form zur Anwendung kommen.

Die Steckausnehmungen können, wie auch bevorzugt, in den Seitenwänden vorgesehen sein und die Steckausformungen an den Stirnwänden. Denkbar ist diesbezüglich auch eine umgekehrte Anordnung, bei welcher die Steckausnehmungen stirnwandseitig vorgesehen sind und die Steckausformungen an den Seitenwänden.

Hinsichtlich einer Steckverbindung kann auch gegeben sein, dass diese für sich nicht oder nur durch Klemmung eine Halterung ergibt. Hierbei kann zusätzlich vorgesehen sein, dass die Festlegung durch einen Klebstoff, beispielsweise auch durch einen Montageschaum, erreicht wird und/oder durch Nägel oder Schrauben, wie insbesondere in letzterer Hinsicht als Dämmstoffdübel bekannte Verbindungselemente für Schaumstoffteile.

Die mehrfach vorgesehenen Steckausnehmungen beziehungsweise Steckausformungen können über die Länge der Seitenwände beziehungsweise der Stirnwände betrachtet in Nebeneinanderanordnung vorgesehen sein, hierbei beispielsweise über die Länge gleiche Abstände, alternativ ungleiche Abstände, zueinander aufweisend.

Auch können, wie weiter bevorzugt, die Steckausnehmungen und/oder Steckausformungen untereinander gleich gestaltet sein, so dass sich entsprechend in Nebeneinanderanordnung eine Wiederholung der Steckausnehmungen beziehungsweise Steckausformungen ergeben kann.

Bezüglich der Versandanordnung kann eine Lösung der Aufgabe dadurch ergeben sein, dass eine erstunterste Lage aus einer Seitenwand besteht, auf der als zweitunterste Lage eine zweite Seitenwand deckungsgleich angeordnet ist, wobei sich über der zweituntersten Lage zwei Stirnwände und ein oder mehrere Bodenabstützteile befinden oder dass die zweite Seitenwand als oberste Lage angeordnet ist und die zwei Stirnwände und ein oder mehrere Bodenabstützteile sich in Höhenrichtung zwischen den zwei Seitenwänden befinden. Hierbei kann im Einzelnen bevorzugt sein, dass die strukturierte Seite einer Seitenwand nach innen bzw. zuweisend zu der obersten Lage des Stapels gegeben ist.

Zufolge der vorgeschlagenen Anordnung der Wannenträgerteile ist eine günstige Stapelung derselben zur Ermöglichung einer günstigen Versandanordnung gegeben.

Die vorgeschlagene Stapelanordnung kann darüber hinaus als Paket zusammengefasst sein, beispielsweise durch Umfassung des Stapels durch eine Folie oder dergleichen. In vorteilhafter Weise können solche Pakete an Wannenträger-Stapel zufolge der vorgeschlagenen Anordnung innerhalb eines Stapels übereinander, sich aufeinander abstützend angeordnet werden. Hierdurch ist eine günstige Bevorratung und gegebenenfalls auch ein günstiger Transportversand möglich.

Weitere Merkmale sind nachfolgend, auch in der Figurenbeschreibung, oftmals in ihrer bevorzugten Zuordnung zum Gegenstand des Anspruches 1 und/oder des Weiteren unabhängigen Anspruches oder zu Merkmalen weiterer Ansprüche erläutert. Sie können aber auch in einer Zuordnung zu nur einzelnen Merkmalen des Anspruches 1 und/oder des Weiteren unabhängigen Anspruches oder des jeweiligen weiteren Anspruches oder jeweils unabhängig von Bedeutung sein.

So kann gemäß einer weiter vorgeschlagenen Ausgestaltung vorgesehen sein, dass in einer Seitenwand in einer Längserstreckung der Seitenwand nebeneinander zwei oder mehr Reihen von Steckausnehmungen ausgebildet sind. Diese Reihen von Steckausnehmungen sind wahlweise nutzbar zur Steckanordnung der Stirnwände, welche die entsprechenden Steckausformungen aufweisen. Hierdurch kann durch entsprechende Steckzuordnung der Stirnwände zu den Reihen von Steckausnehmungen eine individuelle Länge des Wannenträgers eingestellt werden.

Die zwei oder mehr Reihen von Steckausnehmungen können, wie auch bevorzugt, gleichgestaltet sein, dies insbesondere bezüglich der Anzahl und/oder Ausgestaltung der einzelnen Steckausnehmungen.

Es können weiter beispielsweise zwei, drei oder vier Reihen, darüber hinaus fünf oder mehr Reihen solcher Steckausnehmung vorgesehen sein, beispielsweise bis hin zu zehn oder zwanzig solcher Reihen.

Eine Steckausnehmung kann quer zur Steckrichtung betrachtet randseitig umlaufend geschlossen ausgebildet sein. Die Steckrichtung kann hierbei, wie auch bevorzugt, senkrecht gerichtet sein zu einer Breitflächenerstreckung der Seitenwand.

Die jeweilige Steckausnehmung ist zufolge der randseitig umlaufend geschlossenen Ausbildung beispielsweise in Art einer topfartigen Vertiefung oder eines fensterartigen Durchbruches gestaltet. Diese Ausbildung kann, wie weiter bevorzugt, nur eine Steckrichtung senkrecht zur Breitflächenerstreckung der Seitenwand zulassen, dabei gegebenenfalls auch nur von einer Breitenflächen aus, so dass eine eindeutige Steckrichtung gegeben sein kann.

Auch kann eine Steckausbildung ein hakenförmiges Profil mit einem im Zusammenbauzustand nach oben oder unten gerichteten Haken aufweisen. Das hakenförmige Profil kann beispielsweise die Möglichkeit eines Hintergreifens des die Steckausnehmung umgebenden Bereichs der Seitenwand durch die hakenförmige Steckausformung bieten.

Durch das hakenförmige Profil kann ein Ein- oder Hinterhaken ermöglicht sein, wobei die Seitenwand im Nutzungszustand des Wannenträgers tendenziell in Richtung auf die Hintergriffstellung zu dem hakenförmigen Profil der Steckausformung der Stirnwand gerichtet belastet sein kann.

Die Steckausnehmung kann in Steckrichtung betrachtet, stufenartig gebildet sein, mit einem vertikalen Freiraum auf der in Steckrichtung ersten Stirnfläche der Steckausnehmung, wobei die Stirnfläche der Stirnfläche des hakenförmigen Vorsprungs in Steckrichtung insoweit entsprechen kann.

So kann zufolge dieser Ausgestaltung die Steckausformung in Steckrichtung zunächst in die Steckausnehmung eingeführt werden und hiernach zufolge einer Relativverlagerung quergerichtet zur Steckrichtung in eine Hintergriffstellung verbracht werden. In dieser Hintergriffstellung kann beispielsweise ein hakenförmiges Profil der Steckausformung im Bereich einer in der Steckausnehmung vorgesehenen Stufe den Hintergriff bilden.

Die Steckausformung kann auch nur zur Steckung in vertikaler Richtung ausgestaltet sein und hierbei beispielsweise eine Innenausnehmung in Schwalbenschwanzform oder eine Steckausformung in Schwalbenschwanzform gegeben sein. Hier kann anstatt eines Schwalbenschwanzes auch eine Rundkörperausbildung vorgesehen sein.

Insbesondere im Hinblick auf die angesprochenen möglichen zusätzlichen Befestigungsmöglichkeiten durch eine Verklebung und/oder Verschraubung kann die Steckausformung auch aus mehreren in Horizontalrichtung nebeneinander befindlichen sich vertikal erstreckenden Rippen oder Nuten bestehen mit bevorzugt angepasster Ausformung auf einer gegenüberliegenden Seite des einzusteckenden Teils.

Über eine Längserstreckung der Seitenwände betrachtet kann mindestens ein relativ zu den Seitenwänden variabel anordenbares Bodenabstützteil vorgesehen sein. Ein solches Bodenabstützteil dient zur unterseitigen, das heißt bodenseitigen Abstützung der aufzunehmenden Wannenform. Es können ein oder mehrere solcher Bodenabstützteile vorgesehen sein. Sind dabei mehrere solcher Bodenabstützteile in einer Versandanordnung der gestapelten Teile des Wannenträgers vorgesehen, so müssen nicht zwangsläufig alle vorgesehenen Bodenabstützteile in der Nutzungsstellung beziehungsweise im Zusammenbauzustand zur Anwendung kommen.

So können beispielsweise zwei oder drei bis hin zu fünf solcher Bodenabstützteile vorgesehen sein. Bevorzugt sind diesbezüglich ein oder zwei Bodenabstützteile.

Jedes Bodenabstützteil kann bezüglich der Längserstreckung der Seitenwände individuell anordenbar sein. Alternativ kann in diesem Zusammenhang auch eine feste Anordnung, beispielsweise gerasterte Anordnung des einen oder der mehreren Bodenabstützteile gegeben sein, entsprechend in vorgegebenen aber variablen Abständen zu den Stirnwänden.

Zur Einstellung einer variablen, an die abzustützende Wannenform anpassbaren Höhe kann das Bodenabstützteil einen Rahmenkörper aufweisen, in den ein höhenmäßig variabel befestigbares Stützteil einsetzbar ist. Der Rahmenkörper kann sich hierbei im Zusammenbauzustand auf einem Boden, beispielsweise einem Gebäudeboden, abstützen. Die Abstützung beziehungsweise Unterstützung der Wannenform wird erreicht durch das in dem Rahmenkörper eingesetzte Stützteil. Die erforderliche Höhe des Stützteiles relativ zu dem Rahmenkörper kann durch Festsetzen des Stützteiles an dem Rahmenkörper fixiert werden. Hierzu kann beispielsweise eine Verklebung durchgeführt werden. Eine solche variable Höheneinstellung eines Bodenabstützteils ist beispielsweise aus der DE 10 2006 009 843 B4 bekannt. Der Inhalt dieser Patentschrift wird hiermit vollinhaltlich in die Offenbarung vorliegender Erfindung mit einbezogen, auch zu dem Zweck, Merkmale dieser Patentschrift in Ansprüche vorliegender Erfindung mit einzubeziehen.

Das Stützteil kann im Bereich eines mit dem Rahmenkörper mittelbar oder unmittelbar korrespondierenden Bereiches mit dem Rahmenkörper beispielsweise verklebt sein. Hierzu kann ein flüssiges, insbesondere zähflüssiges Verbindungsmittel zur Anwendung kommen. Ein solches flüssiges Verbindungsmittel kann beispielsweise Silikon sein. Darüber hinaus aber auch ein MS-Polymer oder PUR-Montageschaum.

Mit einem solchen Verbindungsmittel kann darüber hinaus auch der Rahmenkörper beziehungsweise das Bodenabstützteil insgesamt bodenseitig, gegebenenfalls gebäudebodenseitig festgelegt werden.

Hierbei kann weiter der Rahmenkörper im Zusammenbauzustand eine Erstreckung in Querrichtung des Wannenträgers - und somit quer zur Längserstreckung der Seitenwände - aufweisen, die geringer ist als der freie Abstand zwischen den Seitenwänden. Hieraus kann sich eine freie, variable Anordenbarkeit des Rahmenkörpers und somit des Bodenabstützteils insgesamt relativ zur Längserstreckung der Seitenwände und/oder relativ zur Breitenerstreckung der Stirnwände im Zusammenbauzustand des Wannenträgers ergeben.

So kann weiter das diesbezügliche Erstreckungsmaß des Rahmenkörpers dem 0,1-Fachen bis hin zu beispielsweise dem 0,9-Fachen des freien Abstandsmaßes zwischen den Seitenwänden entsprechen, weiter beispielsweise dem 0,5-Fachen bis 0,95-Fachen. Durch Auftragen des Verbindungsmittels kann der verbleibende Abstand zwischen dem Rahmenkörper und den Seitenwänden überbrückt werden.

Auch kann der Rahmenkörper einen oder mehrere Halterungsvorsprünge aufweisen, die sich im Zusammenbauzustand ausgehend von dem Rahmenkörper in Richtung auf die gegenüberliegenden Seitenwände erstrecken können.

Diese Halterungsvorsprünge können sich ausgehend von dem Rahmenkörper nach außen erstrecken und können so zur Stabilität des Rahmenkörpers insgesamt und gegebenenfalls darüber hinaus zur günstigen Ableitung von in das Bodenabstützteil eingeleiteter Kräfte insbesondere in den Gebäudeboden dienen.

So können weiter zwei oder drei, gegebenenfalls vier oder mehr bis hin zu acht oder mehr solcher Halterungsvorsprünge vorgesehen sein. In einer bevorzugten Ausführungsform sind zwei Halterungsvorsprünge, gegebenenfalls aber auch vier Halterungsvorsprünge, vorgesehen. Im Falle von vier Halterungsvorsprüngen sind diese bevorzugt paarweise sich gegenüberliegend angeordnet. So kann weiter beispielsweise bei einem Rahmenkörper mit im Wesentlichen rechteckigem Grundriss - bezogen auf die Aufstandsfläche auf dem Boden - jedem Eckbereich ein Halterungsvorsprung vorgesehen sein, der in Art eines Stützfußes ausgehend von dem Rahmenkörper sich etwa entlang einer Winkelhalbierenden, bezogen auf die Eckausbildung zwischen einer Längs- und einer Breitseite des Rahmenkörpers, erstrecken kann.

Auch kann eine Seitenwand eine Halterungsausformung aufweisen, zur Formschlussfestsetzung des Bodenabstützteils in Längsrichtung der Seitenwände. So kann das Bodenabstützteil, gegebenenfalls der Rahmenkörper, mit einem vorgesehenen Halterungsvorsprung im Zusammenbauzustand in eine zugeordnete Halterungsausformung der Seitenwand eingesteckt sein. Die Erstreckungslänge des Rahmenkörpers quer zur Längserstreckung des Wannenträgers kann entsprechend hierbei so gewählt sein, dass diese zumindest dem freien Abstand zwischen den Seitenwänden entspricht.

Jede Seitenwand kann mehrere solcher Halterungsausformungen aufweisen, zur Anordnung einer Mehrzahl von Bodenabstützteilen und/oder zur semivariablen Anordnung der Bodenabstützteile relativ zu den Seitenwänden.

Auch kann eine Seitenwand bezogen auf den Zusammenbauzustand einen oder über die Längserstreckung der Seitenwände verteilt mehrere sich vertikal erstreckende Vorsprünge aufweisen, die unterhalb etwa einer halben Höhe der Seitenwand beginnen und die Unterseite der Seitenwand örtlich verbreitern.

Solche Vorsprünge können zur Stabilität der Seitenwände insbesondere im Benutzungszustand beitragen. Es ist hierdurch eine günstige Krafteinleitung in den Boden, beispielsweise Gebäudeboden, bei insgesamt schlanker, das heißt quer zur Längserstreckung betrachtet dünnwandiger und somit Herstellungskosten sparender Bauform erreichbar. Insgesamt können diese Vorsprünge zur Aussteifung der Seitenwand beitragen.

Ein solcher Vorsprung kann sich in Vertikalrichtung und quer zur Längserstreckung der Seitenwand nach unten hin keilartig verbreitern, dies bevorzugt mit einer nach oben gerichteten Keilspitze. Dabei kann der Vorsprung im Zusammenbauzustand betrachtet, unten, das heißt im Bereich der Auflagefläche, einen quer zur Längserstreckung der Seitenwand betrachteten Überstand über die den Vorsprung in Längserstreckungsrichtung der Seitenwand beidseitig begrenzende Fläche der Seitenwand aufweisen, der beispielsweise dem 0,3- bis 2-Fachen der in selber Richtung betrachteten Materialstärke der Seitenwand außerhalb der Vorsprünge entsprechen kann, so weiter beispielsweise dem 0,5-bis 1-Fachen.

In einer weiter möglichen Ausgestaltung können die Vorsprünge im Zusammenbauzustand nach innen, entsprechend aufeinander zu gerichtet, weisen.

Die hakenförmige Steckausformung zur Zusammenwirkung mit den Steckausnehmungen in den Seitenwänden kann gemäß einer weiteren Ausgestaltung an einem mit der Stirnwand steckverbindbaren Leistenteil ausgebildet sein. Das Leistenteil kann kombinierbar sein mit der Stirnwand, zur variablen Breiteneinstellung der Seitenwand insgesamt.

Ein solches Leistenteil kann gemäß einer möglichen Ausgestaltung nur einseitig einer Stirnwand zugeordnet an dieser angeordnet werden. In weiterer Ausgestaltung können auch beidseitig der Stirnwand derartige Leistenteile angeordnet und befestigt werden.

Es ist so ermöglicht, wahlweise entweder die Stirnwand unmittelbar unter Nutzung gegebenenfalls vorgesehener Steckausformungen mit der Seitenwand steckzuverbinden oder unter Zwischenschaltung des Leistenteils, wobei in diesem Fall die Steckausformungen des Leistenteils in die Hintergriffstellung zu den Steckausnehmungen der zugewandten Seitenwand verbracht werden.

In einer Versandanordnung können je Stirnwand gegebenenfalls mehrere Leistenteile zuordbar beigefügt sein, darüber hinaus gegebenenfalls auch Leistenteile mit im Zusammenbauzustand unterschiedlichen Breiten. Bezüglich der im Zusammenbauzustand betrachteten Höhen der Leistenteile können diese den Höhen der Stirnwände entsprechen.

Die Stirnwand kann bezogen auf einen Zusammenbauzustand in einem Vertikalschnitt einen hammerartig gestalteten Vorsprung aufweisen, zum Eingriff in eine Ausnehmung des Leistenteils.

Die Verbindung zwischen Leistenteil und Stirnwand kann so in Art einer Steck-Hintergriffverbindung oder beispielsweise einer Nut-Feder-Verbindung realisiert sein.

Mit Bezug auf eine im Zusammenbauzustand in Breitenrichtung mittig sich erstreckende Vertikalebene kann gegenüberliegend zu der Ausnehmung an dem Leistenteil ein hammerartig gestalteter Vorsprung ausgebildet sein. Dieser Vorsprung kann, wie auch bevorzugt, gleichgestaltet sein, wie der Vorsprung der Stirnwand zur Steckzusammenwirkung mit dem Leistenteil.

Zufolge dieser Ausgestaltung kann an dem Leistenteil zur weiteren Verbreiterung der Stirnwand insgesamt ein weiteres Leistenteil angesteckt werden, in gleicher Art wie die Festlegung des Leistenteils an der Stirnwand.

An der Seitenwand und/oder an dem Leistenteil kann sich der Vorsprung gegebenenfalls über die gesamte Höhe erstrecken. Alternativ kann auch eine Mehrzahl von Vorsprüngen vorgesehen sein. Auch kann insbesondere an dem Leistenteil eine Mehrzahl an Ausnehmungen ausgebildet sein.

In einer möglichen Ausgestaltung bilden die hammerartig gestalteten Vorsprünge der 7Seitenwand und/oder des Leistenteils die hakenförmigen Steckausformungen zur Steckzusammenwirkung mit den Steckausnehmungen der Seitenwände.

Die durch die Seiten- und Stirnwände, gegebenenfalls ergänzt durch ein oder mehrere Leistenteile, bodenseitig begrenzte Rechtecköffnung kann im Zusammenbauzustand nur durch ein oder mehrere Bodenabstützteile zumindest teilweise ausgefüllt sein, wobei im Übrigen aber der unmittelbare Zugang zu einem bevorzugten Gebäudeboden zugelassen sein kann. Entsprechend kann gemäß einer möglichen Ausgestaltung kein gesondertes, die Rechtecköffnung im Wesentlichen im Ganzen ausfüllendes Bodenteil vorgesehen sein. Die Anordnung der Seiten- und Stirnwände wie auch des einen oder der mehreren Bodenabstützteile kann so entsprechend auch unmittelbar auf dem Gebäudeboden, insbesondere Rohboden, erfolgen.

Im Zusammenhang mit der Versandanordnung der gestapelten Teile des Wannenträgers können gemäß einer weiteren Ausgestaltung zwei Bodenabstützteile vorgesehen sein, die bezüglich einer Längserstreckung der Seitenwände beidseitig von den etwa mittig angeordneten Stirnwänden vorgesehen sein können.

So kann eine insgesamt etwa symmetrische Anordnung der gestapelten Teile des Wannenträgers vorgesehen sein, dies mit Bezug auf eine Symmetrieebene, die sich in Längserstreckung der Seitenwände mittig und in Querrichtung zu den Seitenwänden erstreckt.

In vorteilhafter Weise kann die Höhe eines Bodenabstützteils etwa der zusammengefassten vertikalen Höhe der Stirnwände entsprechen - dies mit Bezug auf den Stapelzustand. Hieraus kann sich zumindest annähernd eine Auflageebene für einen weiteren aufzusetzenden Stapel an Teilen eines weiteren Wannenträgers ergeben. Die im Stapelzustand bevorzugt nach oben weisenden Stirnflächen der Bodenabstützteile und die nach oben weisende Breitseitenfläche der obersten Lage der Stirnwände können sich - zumindest annähernd - in einer gemeinsamen Ebene erstrecken. Diese Ebene kann, wie weiter auch bevorzugt, in der Versandanordnung zumindest annähernd eine Horizontalebene sein.

Die vor- und nachstehend angegebenen Bereiche beziehungsweise Wertebereiche oder Mehrfachbereiche schließen hinsichtlich der Offenbarung auch sämtliche Zwischenwerte ein, insbesondere in 1/10-Schritten der jeweiligen Dimension, gegebenenfalls also auch dimensionslos. Beispielsweise beinhaltet die Angabe 0,5- bis 0,9-Fach auch die Offenbarung von 0,6- bis 0,9-Fach, 0,5- bis 0,8-Fach, 0,6- bis 0,8-Fach etc. Diese Offenbarung kann einerseits zur Eingrenzung einer genannten Bereichsgrenze von unten und/oder oben, alternativ oder ergänzend aber zur Offenbarung eines oder mehrerer singulärer Werte aus einem jeweilig angegebenen Bereich dienen.

Im Folgenden werden mit Verweis auf die Figuren Ausführungsbeispiele der Erfindung beschrieben.

### Kurze Beschreibung der Figuren

Die Figuren zeigen:
- Fig. 1: in perspektivischer Darstellung eine Lose-Anordnung von Teilen zur Bildung eines Wannenträgers, sowie eine Einbauprotokollerstellungseinrichtung und einen Server;
- Fig. 2: in perspektivischer Darstellung die Teile des Wannenträgers in einer gestapelten Versandanordnung;
- Fig. 2a: eine perspektivische Darstellung der Teile des Wannenträgers in einer zu Figur 2 alternativen gestapelten Versandanordnung;
- Fig. 3: in einer Stirnansicht gemäß Pfeil III in Figur 2 eine Stapelanordnung einer Mehrzahl von Versandanordnungen;
- Fig. 4: in perspektivischer Darstellung eine Seitenwand und zwei Stirnwände zur Bildung des Wannenträgers;
- Fig. 5: den vergrößert dargestellten Schnitt gemäß Schnittbereich V in Figur 4 durch eine Steckausnehmung der Seitenwand;
- Fig. 6: eine der Figur 5 entsprechende Darstellung, jedoch bei mit der Seitenwand steckverbundener Stirnwand;
- Fig. 7: eine weitere perspektivische Darstellung der Anordnung gemäß Figur 4;
- Fig. 8: eine der Figur 4 entsprechende Darstellung, betreffend eine alternative Ausgestaltung der Seitenwand;
- Fig. 9: in perspektivischer Darstellung eine alternative Ausgestaltung der Stirnwand mit beidseitig steckhalterbaren, gleichgestalteten Leistenteilen;
- Fig. 10: die perspektivische Rückansicht zu Figur 9;
- Fig. 11: den Schnitt gemäß der Linie XI-XI in Figur 10,
- Fig. 12: die Ansicht gemäß Figur 9 bei an der Stirnwand steckgehalterten Leistenteilen;
- Fig. 13: die Rückansicht zu Figur 12;
- Fig. 14: eine Schnittdarstellung gemäß Figur 11, betreffend die Anordnung gemäß Figur 13;
- Fig. 15: eine der Figur 12 entsprechende Darstellung, jedoch bei beidseitiger Steckhalterung unterschiedlich breiter Leistenteile;
- Fig. 16: eine weitere der Figur 12 entsprechende Darstellung, betreffend eine weitere Ausführungsform;
- Fig. 17: eine der Figur 9 entsprechende Darstellung, betreffend eine Ausführungsform mit einerends der Stirnwand zwei steckhalterbaren Leistenteilen und anderenends einem steckhalterbaren Leistenteil;
- Fig. 18: die Rückansicht zu Figur 17;
- Fig. 19: den Schnitt gemäß der Linie XIX-XIX in Figur 18;
- Fig. 20: eine der Figur 12 entsprechende Darstellung, betreffend die Ausführungsform gemäß Figur 17;
- Fig. 21: die Rückansicht zu Figur 20;
- Fig. 22: eine Schnittdarstellung gemäß Figur 19, betreffend die Anordnung gemäß Figur 21;
- Fig. 23: eine weitere der Figur 9 entsprechende Darstellung, betreffend einer Ausführungsform mit beiderends der Stirnwand vorgesehenen zwei steckhalterbaren Leistenteilen;
- Fig. 24: die Rückansicht zu Figur 23;
- Fig. 25: den Schnitt gemäß der Linie XXV-XXV in Figur 24;
- Fig. 26: eine Draufsicht auf einen Wannenträger im Zusammenbauzustand;
- Fig. 27: den Schnitt gemäß der Linie XXVII-XXVII in Figur 26;
- Fig. 28: den Schnitt gemäß der Linie XXVIII-XXVIII in Figur 26;
- Fig. 29: eine der Figur 26 entsprechende Darstellung, betreffend eine weitere Ausführungsform.

### Beschreibung von Ausführungsformen

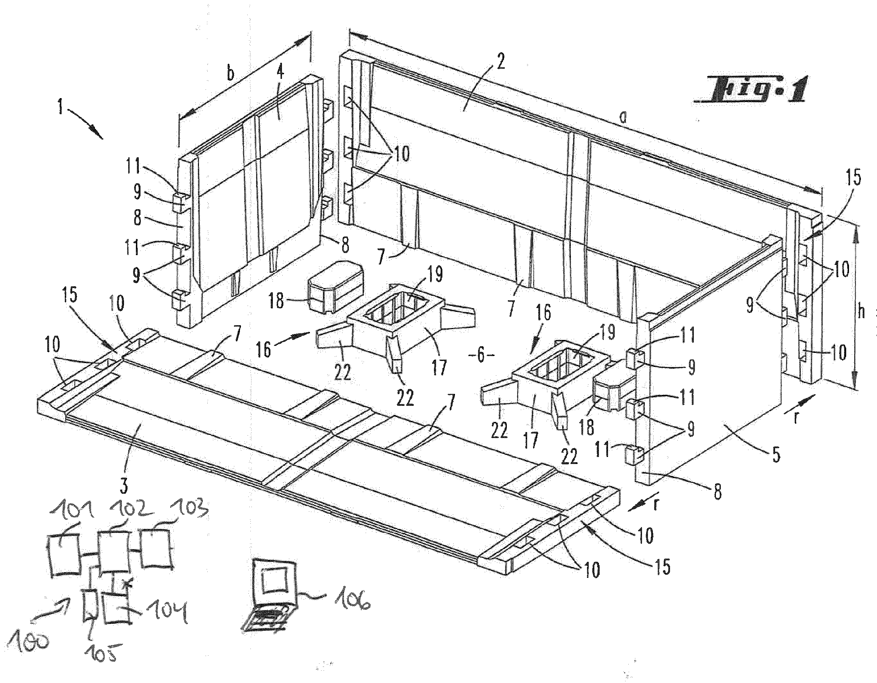

Dargestellt und beschrieben ist, zumindest mit Bezug zu Figur 1, ein Wannenträger 1, der aus Einzelteilen, wie insbesondere zwei Seitenwänden 2, 3 und zwei Stirnwänden 4, 5, steck-zusammensetzbar ist. Es kann sich dabei, wie in den Zeichnungen dargestellt, um einen Wannenträger 1 für eine Badewannenform handeln.

Es ist eine Einbauprotokollerstellungseinrichtung 100 vorgesehen, eingerichtet zur Erstellung eines Einbauprotokolls des Wannenträgers 1. Die Einbauprotokollerstellungseinrichtung 100 weist eine Sensorvorrichtung 101, eingerichtet zur Erfassung von geometrischen Einbaubedingungen des Umfelds der geplanten Einbauposition des Wannenträgers und zur Erfassung von Einbaudaten des danach eingebauten Wannenträgers, eine Steuereinheit 102, eingerichtet zur Erstellung des Einbauprotokolls unter Verwendung der erfassten Einbaudaten und eine Speichereinheit 103, eingerichtet zum Speichern des Einbauprotokolls, auf.

Die Einbauprotokollerstellungseinrichtung 100 weist darüber hinaus eine Kommunikationsschnittstelle 104 auf, eingerichtet zur Übermittlung des Einbauprotokolls an die Speichereinheit 103.

Die Sensorvorrichtung 101 kann einen Laserscanner und/oder eine Kamera aufweisen.

Es ist eine Ausgabeeinrichtung 105 vorgesehen, wobei die Steuereinheit 102 eingerichtet ist, unter Verwendung der geometrischen Einbaubedingungen des Umfelds der geplanten Einbauposition des Wannenträgers 1 eine Einbauanweisung zu erstellen und über die Ausgabeeinrichtung auszugeben.

Die Einbauprotokollerstellungseinrichtung 100 ist Teil eines Installations- und Dokumentationssystems 100, 106, welches darüber hinaus einen externen Server 106 aufweist, eingerichtet zum Speichern des Einbauprotokolls. Insbesondere kann ein Abgleich zwischen den Plandaten, z.B. eines Architekts, und den Einbaudaten vor Ort sowie deren Abgleich und Dokumentation vorgesehen sein.

Zunächst erfolgt eine Überprüfung der Bade- bzw. Duschwanne (im Folgenden auch als Wanne bezeichnet) und des Bade- bzw. Duschwannenträgers (im Folgenden auch als Wannenträger bezeichnet) auf Kompatibilität.

Vor dem Einbau der Bade- bzw. Duschwanne mittels Wannenträger erfolgt zunächst ein Abgleich des Typs der Bade- bzw. Duschwanne mit dem in der Planung vorgesehenen Wannentyp. Dazu werden zum Beispiel mit einem elektronischen Scanner/Smartphone die QR-Codes oder andere Informationsträger, wie zum Beispiel RFIDs mit Typenbezeichnung/Artikelbezeichnung der Wanne elektronisch erfasst und mit den Planungsdaten abgeglichen. Liegt Übereinstimmung vor, erfolgt im Einbauprotokoll eine Freigabe zum nächsten Schritt, der Überprüfung der Kompatibilität der Wanne mit dem Wannenträger. Im anderen Fall muss die Wanne gegen den passenden Wannentyp ausgetauscht werden.

Danach erfolgt ein Abgleich der Kompatibilität der Wanne mit dem Wannenträger. Dazu werden zum Beispiel mit einem elektronischen Scanner/Smartphone die QR-Codes oder andere Informationsträger, wie zum Beispiel RFIDs mit Typenbezeichnung/Artikelbezeichnung der Wanne und Typenbezeichnung/Artikelnummer des Wannenträgers erfasst und mit einer Datenbank, in welcher die Kompatibilitäten hinterlegt sind, abgeglichen. Kriterien der Kompatibilität können zum Beispiel Länge, Breite, Tiefe der Wanne, Zuordnung der Bauform/des Typs der Wanne, zu der des Wannenträgers usw. sein. Liegt Kompatibilität vor, erfolgt im Einbauprotokoll eine Freigabe zum nächsten Schritt, der Erfassung der Einbaubedingungen vor Ort. Im anderen Fall wird ein zur vorliegenden Wanne passender Wannenträgertyp vorgeschlagen und der vorliegende Wannenträger gegen den passenden ausgetauscht.

Auch können die baulichen Gegebenheiten/Einbaubedingungen vor Ort überprüft werden, und zwar vor Einbau des Wannenträgers und der Bade- bzw. Duschwanne.

Hierfür erfolgt zunächst ein Abgleich der vorliegenden Bausituation mit den Planungsdaten. Mithilfe elektronischer Hilfsmittel (z.B. 3D-Scanner, Laservermessung, elektronische Kamera ) wird die bauliche Situation im Rohbau des Bades erfasst und im Hinblick auf den Einbau der Wanne und des Wannenträgers mit den Plandaten (3D-Datensatz) abgeglichen. Eine virtuelle Projektion der in einer Datenbank hinterlegten Produkte in die reale Situation im Rohbau des Bades ergibt die Ausrichtung der Wanne mit Wannenträger in Bezug auf die Ausrichtung des Kopf- und Fußbereiches der Wanne, die Anschlussbereiche zu den Bauteilen und die geplante Ver- und Entsorgungsleitungen.

Hierbei wird die Einpassung der Wanne und des Wannenträgers in Länge, Breite, Höhe ("Einhaltung des Meterrisses") sowie Funktion überprüft.

Entsprechen die baulichen Voraussetzungen hinsichtlich des Einbaus der Wanne mit Wannenträger den Plandaten, erfolgt im elektronischen Einbauprotokoll eine Freigabe zum nächsten Schritt. Die virtuelle Projektion der in einer Datenbank hinterlegten Produkte in die reale Situation im Rohbau des Bades wird elektronisch dokumentiert. Im anderen Fall erfolgt eine Abstimmung zwischen Planer und Handwerker gegebenenfalls unter Hinzuziehung des Wannenträger-Herstellers.

Auch kann der Abstand des Wannenträgers von der Rohbauwand mit einbezogen werden. Beim Setzen und Befestigen des Wannenträgers auf dem Rohboden ist der Abstand des Wannenträgers von den angrenzenden Rohbauwänden so einzustellen, dass beim späteren Einsetzen der Bade- oder Duschwanne einerseits deren über den Wannenträgerrand kragender Wannenrand ausreichend Spiel zur Rohbauwand hat (Vermeidung eines mechanischen Kontaktes mit der Wand und damit Vermeidung von mechanischen Spannungen sowie Vermeidung von Körperschallbrücken zur Wand), und andererseits der Abstand so eng gewählt wird, dass beim späteren Befliesen der Wannenrand einen passenden Abschluss mit dem Fliesenspiegel zur Ausbildung einer fachgerechten Anschlussfuge bildet.

Als Hilfsmittel können dabei im Lieferumfang enthaltene Abstandshalter dienen, die am Wannenträger montiert werden, um einen definierten Mindestabstand einzuhalten. Voraussetzung für diese Montageweise ist im Fall des Über-Eck-Einbaus, dass der Winkel, den beide Rohbauwände zueinander bilden, im Bereich von 90° ± 0,19° liegt.

Dazu wird mittels eines optischen Messgerätes (zum Beispiel lasergestützt) von der Einbauprotokollerstellungseinrichtung der Winkel zwischen beiden Rohbauwänden gemessen und auf der Speichereinheit gespeichert und im Einbauprotokoll dokumentiert. Liegt der Messwert im angegebenen Toleranzbereich, erfolgt im Einbauprotokoll eine Freigabe zum nächsten Einbauschritt.

Im anderen Fall müssen die Rohbauwände entsprechend nachgearbeitet werden (zum Beispiel durch Aufspachteln) und die Messung wiederholt werden. Das System kann eingerichtet sein, die erforderlichen Maßnahmen zu berechnen und auszugeben.

Auch kann vorgesehen sein, dass die Untergrundbeschaffenheit bestimmt wird. Eine Voraussetzung für die Stabilität und Tragfähigkeit des Wannenträgers ist die geeignete Beschaffenheit des Untergrundes. Daher ist vor dem Einbau des Wannenträgers vor Ort die Beschaffenheit des Untergrundes durch den Handwerker zu ermitteln. Der Untergrund muss tragfähig und fest sein. Er darf nicht sanden und muss eine Verhaftung zum PUR-Wannenmontageschaum oder Fliesenkleber erlauben. Als Untergründe sind z.B. Beton, (schwimmender) Estrich und ausreichend tragende Holzuntergründe geeignet. Entspricht der Untergrund den vorgegebenen Kriterien, erfolgt im elektronischen Einbauprotokoll eine Freigabe zum nächsten Schritt. Im anderen Fall muss der Untergrund nachgearbeitet werden.

Auch kann vorgesehen sein, dass die erforderlichen baulichen Veränderungen am Wannenträger im Rahmen des Einbaus der Wanne von der Einbauprotokollerstellungseinrichtung erfasst werden. Eine weitere Voraussetzung für die Stabilität und Tragfähigkeit des Wannenträgers ist, dass die für die Durchführung der Ver- und Entsorgungsleitungen erforderlichen Ausnehmungen im Wannenträger vorab erfasst werden. Folgende Maße sollten nicht überschritten werden:
- Der Querschnitt der Aussparung der Abwasseranschlussleitung sollte die Maße 10 cm x 10 cm nicht überschreiten.
- Die Revisionsöffnung sollte die Maße 25 cm x 25 cm nicht überschreiten.
- Im Bodenbereich des Wannenträgers sollten maximal 50% der Stege entfernt werden, nicht jedoch der Bereich der Bodenauflage/Unterstützungsblöcke für die Wanne.

Entsprechen die baulichen Veränderungen am Wannenträger den vorgegebenen Kriterien, erfolgt im elektronischen Einbauprotokoll eine Freigabe zum Bearbeiten des Wannenträgers. Im anderen Fall müssen gegebenenfalls die Durchführungen für die Ver- und Entsorgungsleitungen abgeändert werden oder Rücksprache mit dem Hersteller des Wannenträgers zu alternativen Lösungen erfolgen.

Die baulichen Veränderungen am Wannenträger werden zusätzlich mittels Kamera oder einer anderen Sensoreinheit zur elektronischen Dokumentation erfasst und bilden Teil des Einbauprotokolls.

Auch muss der Wannenträger auf dem tragfähigen Untergrund, wie z.B. dem Rohboden, befestigt werden. Eine weitere Voraussetzung für die Stabilität und Tragfähigkeit des Wannenträgers ist eine ausreichende Verklebung des Wannenträgers auf dem Untergrund. Vor der Verarbeitung erfolgt ein Abgleich des Montageklebertyps mit einer Zubehördatenbank. Dazu werden mithilfe der Einbauprotokollerstellungseinrichtung Typenbezeichnung/Artikelbezeichnung des Klebers z.B. über QR-Codes oder RIFDs elektronisch erfasst und mit der Datenbank abgeglichen. Liegt Übereinstimmung vor, erfolgt im Einbauprotokoll eine Freigabe zum Verkleben. Im anderen Fall muss der Kleber gegen den passenden Klebertypen ausgetauscht werden.

Die einzelnen Teile des Wannenträgers, insbesondere die Seiten- und Stirnwände 2 bis 5, darüber hinaus gegebenenfalls auch, wie weiter unten beschrieben, vorgesehene Bodenabstützteile, können, wie auch bevorzugt, aus einem Hartschaumstoff, insbesondere Partikelschaumstoff wie z.B. EPP, EPS oder expandierter Hartschaum , wie z.B. XPS oder PUR-Hartschaum bestehen. Alternativ kann als Trägermaterial auch Hartschaumstoff aus expandierbaren oder extrudierbaren, nativen oder biobasierten Polymeren, wie z.B. CP, CAB oder PLA gewählt werden. Weiter können auch alternativ mit mineralischem Mörtel beschichtete, gewebearmierte Hartschaumplatten oder Platten aus nachwachsenden Rohstoffen, wie z.B. Platten aus gebundenen Holzfasern als Trägermaterial gewählt werden.

Die Seiten- und Stirnwände 2 bis 5 können mit Bezug auf einen Zusammenbauzustand, wie dieser beispielsweise in Figur 1 angedeutet ist, gleiche Höhen h aufweisen.

Die Seitenwände 2 und 3 können, wie auch bevorzugt, gleichgestaltet sein, wie auch weiter bevorzugt die Stirnwände 4 und 5 untereinander gleichgestaltet sein können.

So weisen die Seitenwände 2 und 3 ein Längserstreckungsmaß a auf, das einem Mehrfachen des quer zur Höhenerstreckung h betrachteten Längserstreckungsmaßes b der Stirnwände 4, 5 entsprechen kann, so weiter beispielsweise einem 2- bis 5-Fachen, weiter beispielsweise etwa einem 2,5- bis 3,5-Fachen.

Die Seitenwände 2, 3 und die Stirnwände 4, 5 sind jeweils im Wesentlichen scheibenartiger Gestalt, entsprechend aufweisend eine quer zur Längserstreckung a beziehungsweise b betrachtete geringe Dicke d, die etwa einem Achtel bis einem Zwölftel, weiter etwa einem Zehntel der Höhe h entsprechen kann.

Insbesondere in den Anschlussbereichen, die im Zusammenbauzustand Eckbereiche des Wannenträgers 1 bilden, können die Seitenwände 2, 3 wie auch die Stirnwände 4, 5 verstärkt sein, können entsprechend in diesen Abschnitten größere Dicken d' aufweisen. So kann eine solche Dicke d' beispielsweise etwa dem 1,2- bis 2-Fachen, weiter beispielsweise etwa dem 1,5-Fachen der verringerten Dicke d entsprechen.

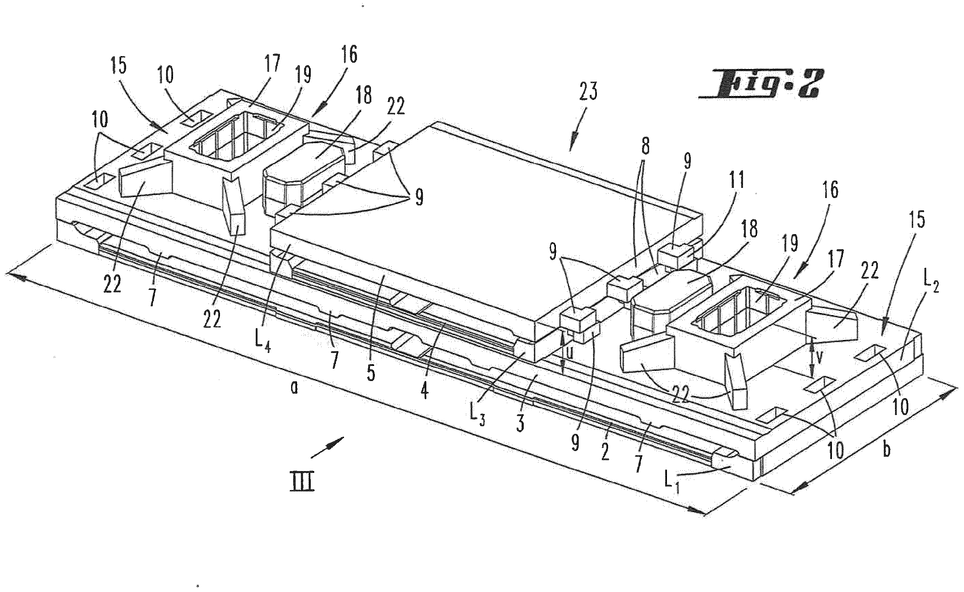

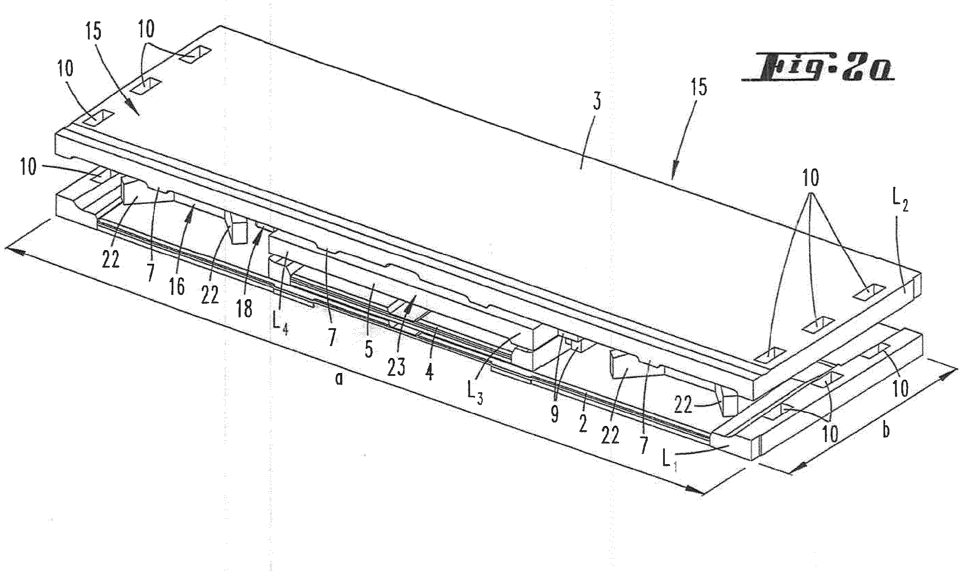

Zur Stabilisierung der Seitenwände 2 und 3, darüber hinaus gegebenenfalls zur Vergrößerung der Aufstandsfläche der Seitenwände 2, 3 auf einem Gebäudeboden 6 oder dergleichen, können die Seitenwände 2, 3 in Bezug auf den Zusammenbauzustand bodenseitig mehrere über die Längserstreckung der Seitenwände 2, 3 gegebenenfalls gleichmäßig verteilt angeordnete Vorsprünge 7 aufweisen. Diese können insbesondere unterhalb etwa einer halben Höhe h der Seitenwände 2, 3 beginnend sich nach unten erstrecken, zur örtlichen Verbreiterung der Seitenwand-Unterseite auf ein Dickenmaß, das im Wesentlichen dem erweiterten Dickenmaß d' in den Eck- beziehungsweise Endbereichen entsprechen kann (siehe hierzu auch Figur 2).

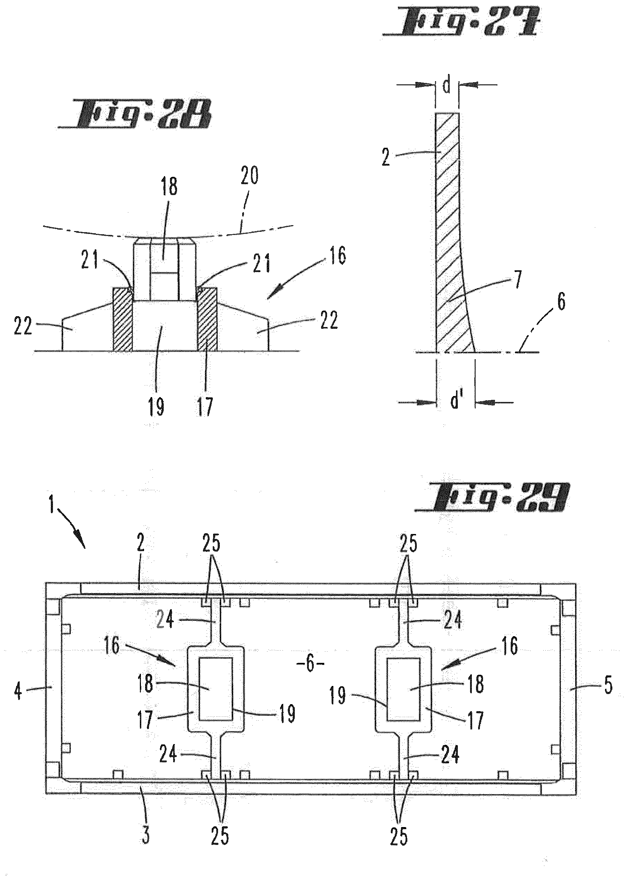

Quer zur Längserstreckung der Seitenwände 2, 3 und in Höhenrichtung betrachtet können die Vorsprünge 7 keilartig sich nach unten in Richtung auf die Aufstandsfläche verbreitern (siehe auch Schnittdarstellung in Figur 28). Die Keilspitze der Vorsprünge 7 weist hierbei in Bezug auf den Zusammenbauzustand nach oben.

In Längserstreckungsrichtung betrachtet kann sich ein Vorsprung 7 etwa über ein Maß erstrecken, das dem erweiterten Dickenmaß d' im Wesentlichen entsprechen kann beziehungsweise an diesem angelehnt sein kann.

In den dargestellten Ausführungsbeispielen sind vier solcher Vorsprünge 7 in Längserstreckung gleichmäßig verteilt wandungsinnenseitig der Seitenwände 2, 3 vorgesehen. Entsprechend sind die Vorsprünge 7 im Zusammenbauzustand aufeinander zuweisend angeordnet.

Derartige Vorsprünge 7 können gegebenenfalls auch wandungsinnenseitig der Stirnwände 4, 5 vorgesehen sein.

Die Stirnwände 4, 5 können im Bereich ihrer jeweiligen Vertikalstirnflächen 8 über diese Stirnflächen frei hinaus abragende Steckausformungen 9 aufweisen, zur Steckzusammenwirkung mit Steckausnehmungen 10 in den Seitenwänden 2, 3.

Wie in den Ausführungsformen dargestellt, können an jeder Vertikalstirnfläche 8 mehrere Steckausformungen 9 vorgesehen sein, die in Höhenerstreckungsrichtung der Stirnwände 4, 5 unter gleichmäßiger Beabstandung in einer Reihe hintereinander angeordnet sein können.

Es können beispielsweise je Vertikalstirnfläche 8 drei oder vier solcher Steckausformungen 9 vorgesehen sein. Darüber hinaus können diese Steckausformungen 9 gleichgestaltet sein, beispielsweise, wie auch dargestellt, in einem Längsquerschnitt durch die Stirnwand 4, 5 ein hakenförmiges Profil mit einem endseitig nach oben gerichteten Haken 11 aufweisend.

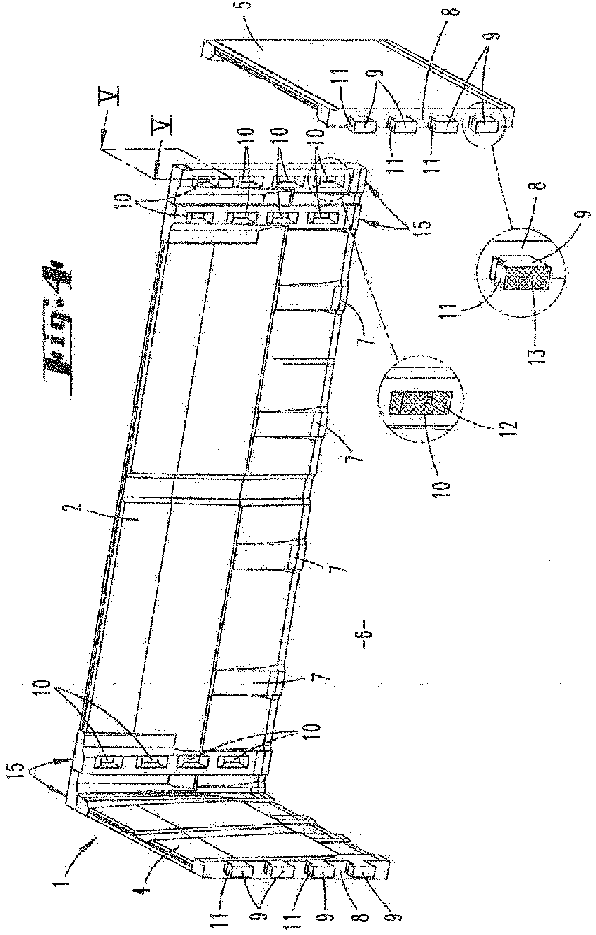

Die zu den Steckausformungen 9 in korrespondierender Ausrichtung in den Seitenwänden 2, 3 vorgesehenen Steckausnehmungen 10 können, wie auch bevorzugt, quer zur Steckrichtung r randseitig umlaufend geschlossen ausgebildet sein (siehe auch Lupendarstellung in Figur 4). Es ergibt sich so bezüglich einer jeden Steckausnehmung 10 ein fensterartiger Durchbruch.

Die in Steckrichtung r betrachtete erste Stirnfläche 12 einer jeden Steckausnehmung 10 kann, wie bevorzugt, flächenmäßig der Stirnfläche 13 des hakenförmigen Profils der Steckausnehmung 9 insoweit entsprechen (siehe auch hierzu die Lupendarstellungen in Figur 4).

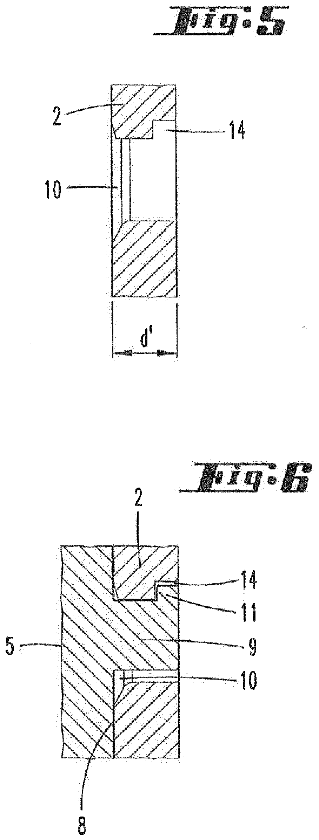

Darüber hinaus kann jede Steckausnehmung 10 in Steckrichtung r stufenartig gebildet sein, mit einem in Steckrichtung r mit Abstand zu der Stirnfläche 12 ausgebildeten vertikalen Freiraum 14, der im Zusammenbauzustand, das heißt in der Steckstellung, von dem Haken 11 der zugeordneten Steckausformung 9 hintergriffen wird (vergleiche Figuren 5 und 6).

Die Anzahl der in einer Reihe übereinander angeordneten Steckausnehmungen 10 kann, wie auch bevorzugt, der Anzahl an Steckausformungen 9 entsprechen, wobei weiter die Steckausnehmungen 10 gleichgestaltet sein können.

Die Steckverbindung ist zufolge dieser Hintergriff-Ausgestaltung im Zusammenbauzustand entgegen der Steckrichtung r gesichert.

Wie ersichtlich, ergibt sich bezüglich der Steckausnehmungen 10 in Abhängigkeit von der Anzahl der vorgesehenen Steckausformungen 9 im Bereich der Vertikalstirnflächen 8 der Stirnwände 4, 5 eine Anzahl von in Höhenrichtung in Reihe hintereinander angeordneter Steckausnehmungen 10.

Es kann, wie in Figur 1 beispielhaft dargestellt, in Längserstreckungsrichtung betrachtet jeweils endseitig einer Seitenwand 2, 3 nur eine Reihe solcher Steckausnehmungen 10 vorgesehen sein.

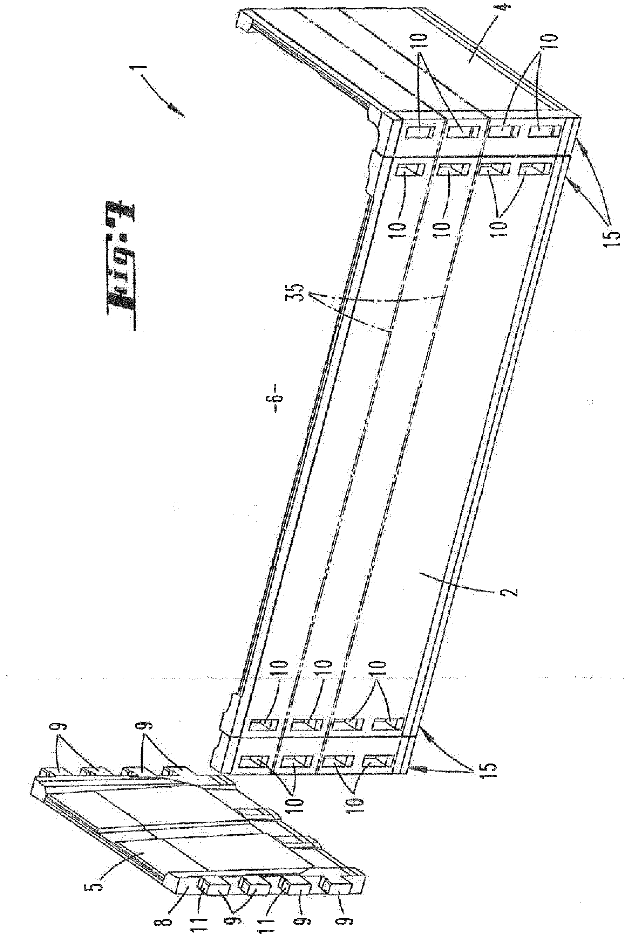

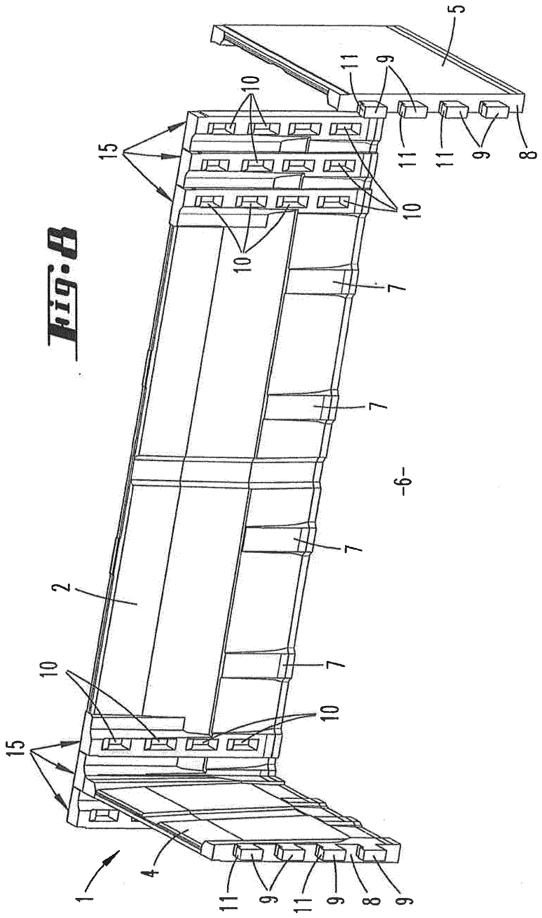

Alternativ können gemäß den weiteren Darstellungen in den Figuren 4 und 7, darüber hinaus auch in der Figur 8, in Längserstreckung der Seitenwand 2, 3 mehrere solcher Steckausnehmungs-Reihen 15 vorgesehen sein, so beispielsweise zwei oder drei solcher Reihen 15.

Hieraus kann sich entsprechend eine variable Längennutzung der Seitenwände 2, 3 ergeben. Die Stirnwände 4, 5 können mit deren Steckausformungen 9 angepasst an die gewünschte Länge des zusammenzusetzenden Wannenträgers 1 einer entsprechend ausgewählten Reihe 15 zugeordnet werden.

Der gegebenenfalls über die nutzbare Länge hinaus frei abragende Bereich mit einer weiteren oder mehreren weiteren Reihen 15 kann in handhabungstechnischer einfacher Weise abgeschnitten werden.

Auch kann alternativ oder kombinativ zu einer solchen Längenvariabilität auch eine solche Variabilität hinsichtlich der Höhe h des Wannenträgers 1 gegeben sein. So können die Seiten- und Stirnwände 2 bis 5 horizontale Schnittebenen, beispielsweise in Form von horizontal zwischen den Steckausnehmungen 10 verlaufenden Nuten 35, aufweisen, entlang welcher ein Ablängen durch Abschneiden erfolgen kann (vgl. Figur 7).

Unter Nutzung einer Seitenwand 2, 3 mit beispielsweise jeweils endseitig drei Reihen 15 an Steckausnehmungen 10, wie dies beispielhaft in Figur 8 dargestellt ist, kann ein Wannenträger 1 in fünf unterschiedlichen Längen zusammengesetzt werden.

Es können weiter Bodenabstützteile 16 vorgesehen sein. In den dargestellten Ausführungsformen sind zwei Bodenabstützteile 16 angeordnet. Je nach Erstreckungslänge des Wannenträgers 1 kann auch gegebenenfalls nur ein Bodenabstützteil 16 vorgesehen sein, darüber hinaus gegebenenfalls mehr als zwei Bodenabstützteile 16, beispielsweise drei oder vier.

Die Bodenabstützteile 16 einer ersten Ausführungsform können sich jeweils aus einem Rahmenkörper 17 und einem Stützteil 18 zusammensetzen. Der Rahmenkörper 17 weist hierbei in einer Nutzungsstellung eine nach oben gerichtete zentrale Öffnung 19 auf. Diese kann, wie auch dargestellt, im Wesentlichen einen rechteckförmigen Grundriss aufweisen.

Insbesondere bei einer Anwendung des Wannenträgers als Duschwannenträger, aber auch unabhängig hiervon, kann der Grundriss auch im Wesentlichen kreisförmig sein.

In diese Öffnung 19 ist das Stützteil 18 im Wesentlichen konturangepasst einsetzbar, dabei relativ zu dem Rahmenkörper 17 in Vertikalrichtung, bezogen auf den Zusammenbauzustand, variabel ausrichtbar und an die in dem Wannenträger 1 aufzunehmende Wannenform 20 anpassbar.

Das Stützteil 18 kann in der gewünschten Vertikalstellung an dem Rahmenkörper 17 festgesetzt werden, beispielsweise unter Nutzung eines Verbindungsmittels, beispielsweise eines flüssigen Verbindungsmittels 24, wie weiter beispielsweise Silikon.

Jedes Bodenabstützteil 16 kann mit Bezug auf die beschriebene Ausführungsform insbesondere hinsichtlich der Längserstreckung der Seitenwände 2, 3 variabel auf dem Gebäudeboden 6 anordenbar sein. Es kann eine Festlegung der Bodenabstützteile 16, insbesondere der Rahmenkörper 17, auf dem Gebäudeboden 6 gegeben sein, beispielsweise über ein Verbindungsmittel, weiter beispielsweise über PURMontageschaum.

Die Rahmenkörper 17 der Bodenabstützteile 16 können vom Rahmenkörper 17 nach außen vorragende Halterungsvorsprünge 22 aufweisen. Diese können sich fußartig nach außen erstrecken, können hierbei unterstützend wirken hinsichtlich der Stabilisierung des Bodenabstützteils 16 insgesamt bei dessen Abstützung auf dem Gebäudeboden 6.

Es können, wie dargestellt, vier solcher Halterungsvorsprünge 22 vorgesehen sein, beispielsweise jeweils zugeordnet einem äußeren Eckbereich des Rahmenkörpers 17, wobei die Halterungsvorsprünge 22 sich jeweils, mit Bezug auf einen Grundriss beziehungsweise auf eine Vertikalprojektion auf den Gebäudeboden 6, entlang einer Winkelhalbierenden zwischen den in diesem Eckbereich aufeinandertreffenden Längs- und Breitenwandung des Rahmenkörpers 17 erstrecken können.

Im Wesentlichen sind die Halterungsvorsprünge 22 ausgehend von dem Rahmenkörper 17 in Richtung auf die Seitenwände 2, 3 gerichtet.

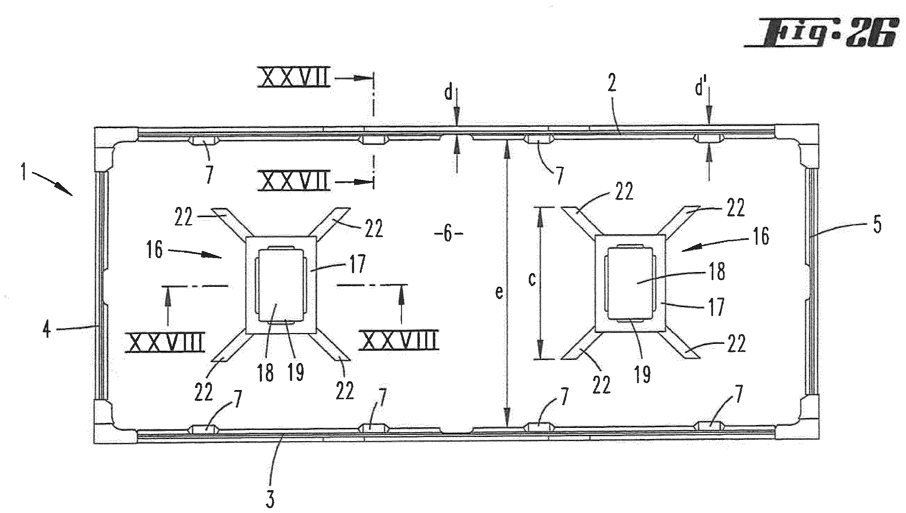

Hierbei kann sich ein Erstreckungsmaß c des Bodenabstützteils 16 beziehungsweise des Rahmenkörpers 17 mit seinen Halterungsvorsprüngen 22 ergeben, dies in einer Richtung quer zur Längserstreckung der Seitenwände 2, 3, welches Erstreckungsmaß c kleiner gewählt sein kann als der freie Abstand e zwischen den Seitenwänden 2, 3 im Zusammenbauzustand (vergleiche auch Figur 26).

So kann das Erstreckungsmaß c eines Bodenabstützteils 16 beispielsweise etwa dem 0,7-bis 0,9-Fachen des Abstandsmaßes e entsprechen.

Darüber hinaus kann das vorbeschriebene Erstreckungsmaß c auch geringer gewählt sein als das Höhenmaß h der Seitenwände 2, 3 und der Stirnwände 4, 5. Dies kann Vorteile bieten hinsichtlich einer möglichen Stapelung der Einzelteile eines Wannenträgers 1, beispielsweise zur Erstellung einer Versandanordnung 23 gemäß der Darstellung in Figur 2.

In einer solchen Versandanordnung 23 ist eine Stapelung der Einzelteile des Wannenträgers 1 gegeben, wobei eine erstunterste Lage L₁ aus einer Seitenwand 2 oder 3 besteht, auf welcher eine zweitunterste Lage L₂, die aus der weiteren Seitenwand 3 oder 4 besteht, deckungsgleich angeordnet ist.

Auf dieser zweiten Lage L₂ können, wie dargestellt, mit Bezug auf die Längserstreckung der Seitenwände 2, 3 beziehungsweise dementsprechend auch mit Bezug auf die Längserstreckung der Versandanordnung 23, mittig deckungsgleich übereinander die Stirnwände 4 und 5 als dritte und vierte Lagen L₃, L₄ angeordnet sein. Bedingt durch die gleichen Höhen h, die in der Versandanordnung 23 gemäß Figur 2 die Breite der Versandanordnung 23 ergibt, schließen die Lagen L₁ bis L₄ quer zur Längserstreckung betrachtet bevorzugt bündig ab.

Beidseitig der dritten und vierten Lagen L₃ und L₄ können die Rahmenkörper 17 und Stützteile 18 zur Bildung von Bodenabstützteilen 16 angeordnet sein. Dargestellt ist die einzelne Anordnung der vorerwähnten Teile. Auch kann das Stützteil 18 vollständig in die Öffnung 19 des Rahmenkörpers 17 eingeschoben sein und das so zusammengesetzte Bodenabstützteil 16 seitlich der Stirnwände 4, 5 auf der zweiten Lage L₂ abgelegt sein.

Die in der Versandanordnung 23 beziehungsweise im Stapelzustand betrachtete zusammengefasste vertikale Höhe u der Stirnwand-Lagen L₃ und L₄ kann im Wesentlichen der in selber Richtung betrachteten Höhe v des Bodenabstützteils 16 und/oder des Rahmenkörpers 17 beziehungsweise des Stützteiles 18 entsprechen.

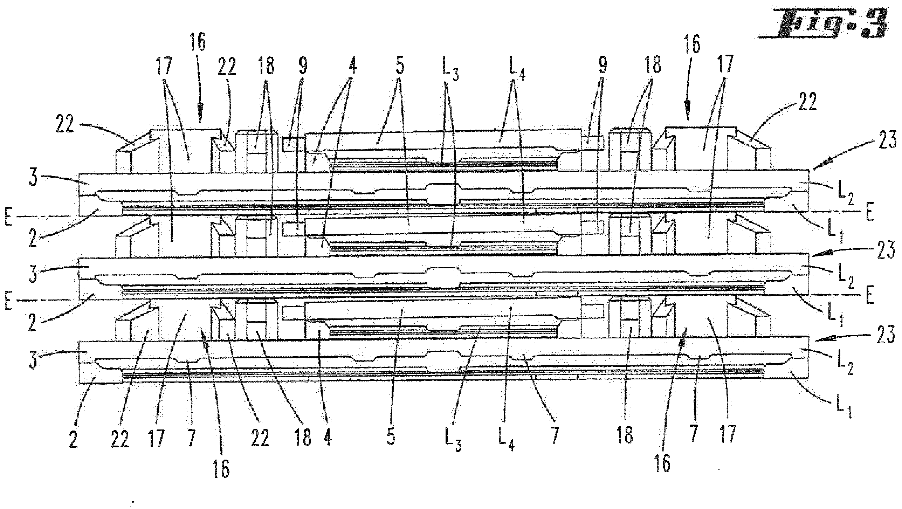

Hieraus kann sich abgewandt der Lage L₂ oberseitig der Lage L₄ eine zumindest annähernd die nach vertikal oben weisenden Oberflächen des Rahmenkörpers 17 und/oder des Stützteiles 18 aufnehmende Auflageebene E ergeben, die es erlaubt, derartige Stapel von Einzelteilen eines Wannenträgers 1 gemäß der Darstellung in Figur 3 übereinander anzuordnen. Es kann sich so ein Stapel von mehreren Wannenträger-Bausätzen ergeben. Zufolge der ebenen Auflagefläche ist eine günstige Stapelung ermöglicht.

Bei der alternativen Stapelung gemäß Figur 2a ist ersichtlich eine Einschachtelung der zwei Stirnwände 4,5 und des ein oder mehreren Bodenabschnittsteilen 16 zwischen zwei Seitenwänden 2, 3 gegeben. Die Seitenwände 2, 3 sind hierbei bevorzugt mit ihrer im Einbauzustand nach innen weisenden Fläche gegeneinander gerichtet in den Stapel aufgenommen.

Alternativ zu der vorbeschriebenen Ausgestaltung des Bodenabstützteils 16 mit fußartigen Halterungsvorsprüngen 22 und die damit gegebene freie Anordnung in Längserstreckung relativ zu den Seitenwänden 2 und 3 kann gemäß der Darstellung in Figur 29 auch eine Festlegung der Bodenabstützteile 16, insbesondere der Rahmenkörper 17 an den Seitenwänden 2, 3 gegeben sein.

Hierzu kann jeder Rahmenkörper 17 wandungsaußenseitig zwei gegenüberliegend und von dem Rahmenkörper 17 weg in Richtung auf die Seitenwände 2, 3 weisende Halterungsstege 24 aufweisen, die sich im Nutzungszustand auf dem Gebäudeboden 6 abstützend jeweils endseitig in eine Halterungsausformung 25 der zugewandten Seitenwand 2, 3 eingreifen.

Diese Halterungsausformung 25 kann nutartig wandungsinnenseitig der jeweiligen Seitenwand 2, 3 ausgeformt sein, womit eine Formschlussfestsetzung des Bodenabstützteils 16 in Längserstreckung der Seitenwände 2, 3 erreichbar ist.

Die Seitenwände 2, 3 können über ihre Länge betrachtet mehrere solcher Halterungsausformungen 25 aufweisen, womit bezüglich der Positionierung der Bodenabstützteile 16 eine eingeschränkt variable Anordnung ermöglicht ist.

Auch ein derart gestaltetes Bodenabstützteil 16 kann in günstiger Weise in einer Versandanordnung 23 gemäß Figur 2 beispielsweise seitlich der Stirnwand-Stapelanordnung angeordnet sein.

Wie weiter aus den Darstellungen in den Figuren 26 und 29 zu erkennen ist, ist die durch die Seitenwände 2, 3 und die Stirnwände 4, 5 bodenseitig begrenzte Rechtecköffnung im Zusammenbauzustand allein durch das eine oder die mehreren Bodenabstützteile 16 unterbrochen. Darüber hinaus ist im Übrigen in dem nicht durch die Bodenabstützteile 16 überdeckten Bereich der unmittelbare Zugang zu dem Gebäudeboden 6 - oder einen anderen gleichwertigen Boden, auf welchem der Wannenträger 1 aufgestellt ist - gegeben.

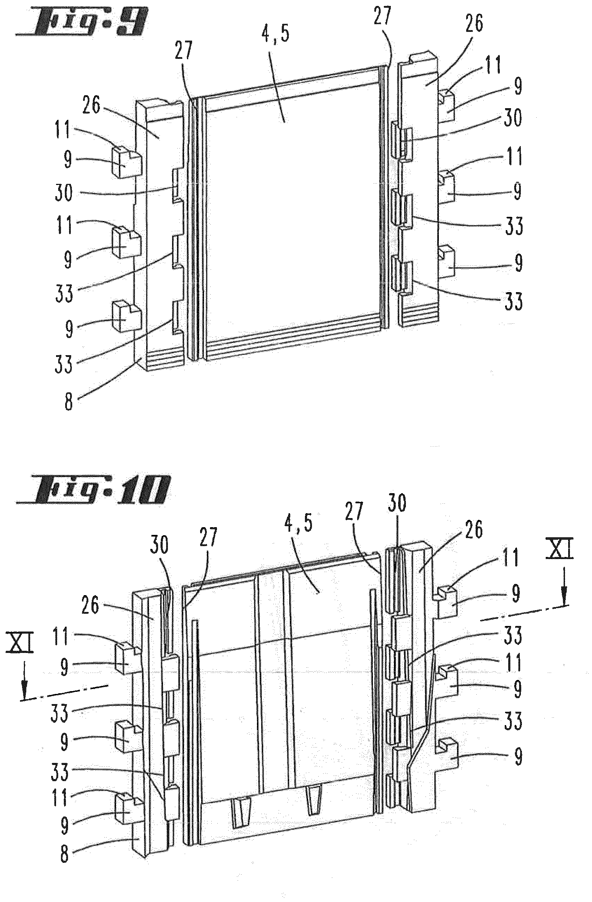

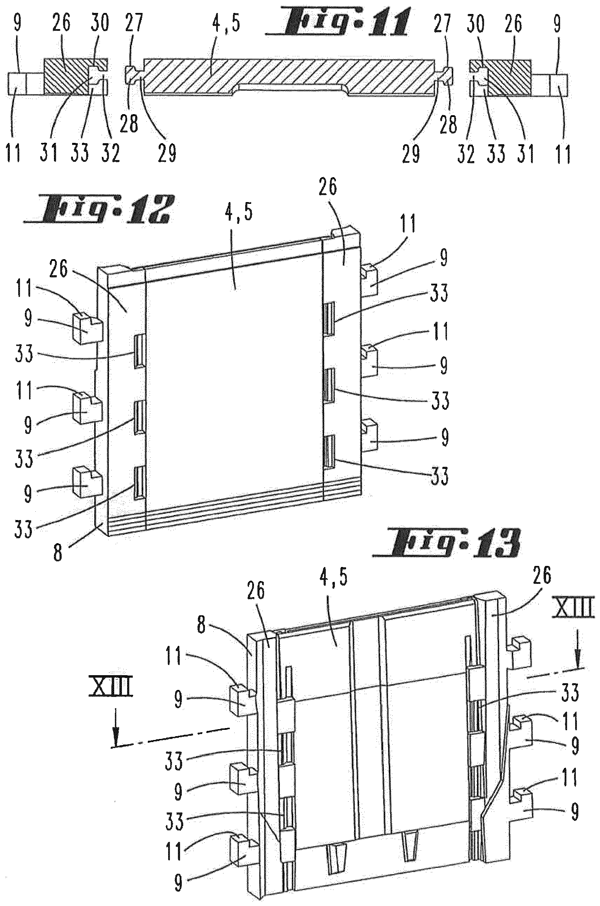

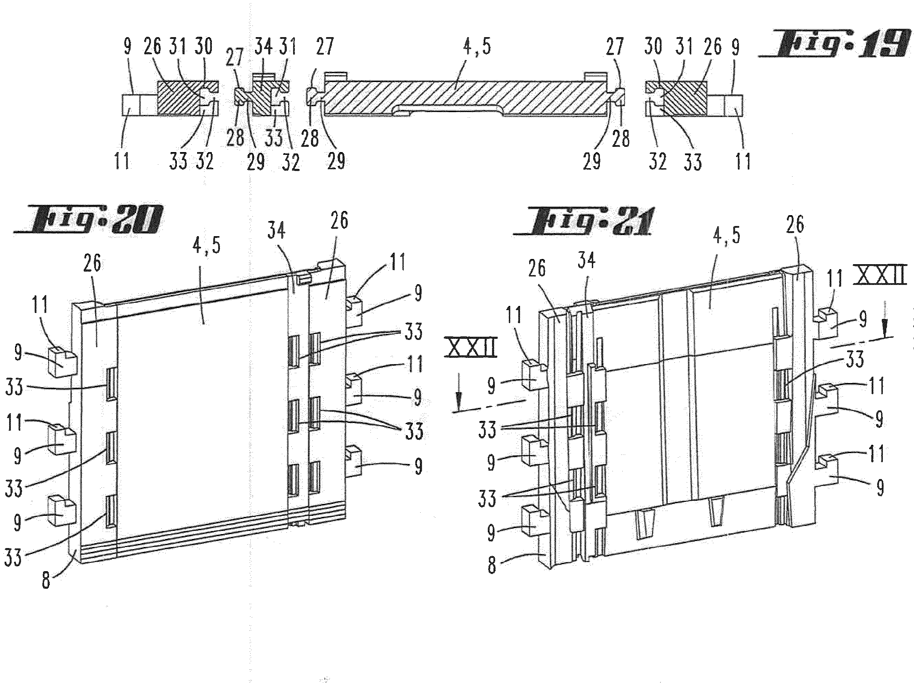

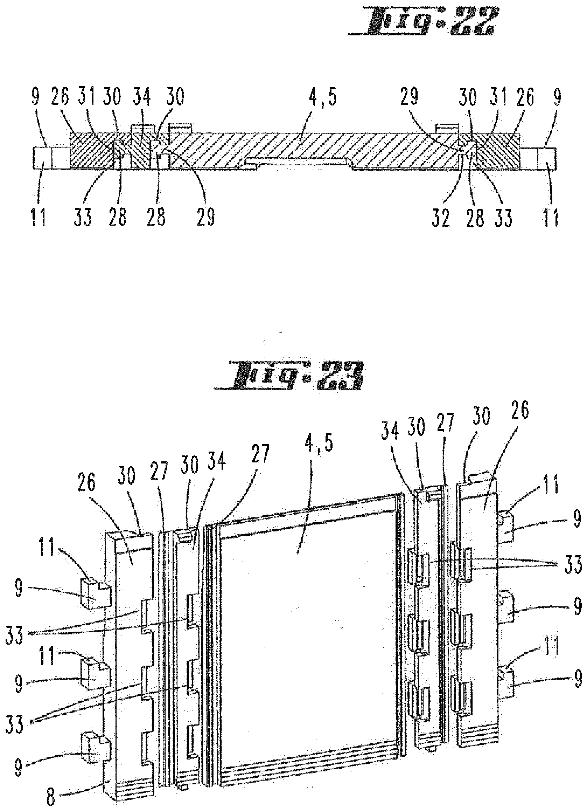

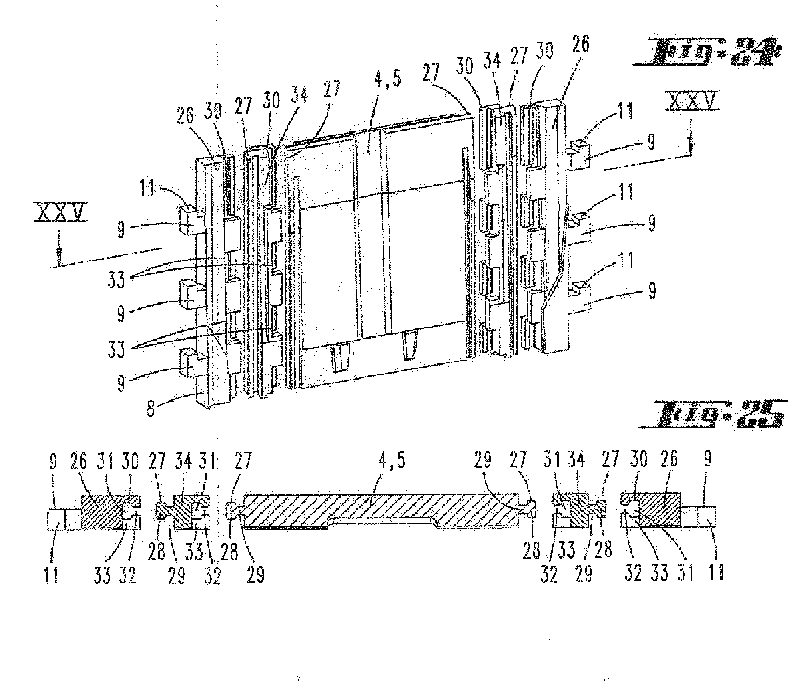

Alternativ oder auch, wie bevorzugt, kombinativ zu der Längenvariabilität der Seitenwände 2, 3 durch Ausbildung einer Mehrzahl von Reihen 15 an Ansteckausnehmungen 10 kann auch eine Längenvariabilität der Stirnwände 4, 5 gegeben sein. Diesbezügliche Ausführungsbeispiele zeigen die Figuren 9 bis 25.

So können die hakenförmigen Steckausformungen 9 gemäß den beschriebenen Stirnwänden 4,5 in diesen Ausführungsformen an mit der Stirnwand 4,5 steckverbindbaren Leistenteilen 26, 26' ausgebildet sein.

Zur Steckverbindung der Leistenteile 26 mit den Stirnwänden 4, 5 können die Stirnwände 4, 5 im Bereich ihrer Vertikalstirnflächen bezogen auf einen Zusammenbauzustand in einem Horizontalschnitt hammerartig gestaltete Vorsprünge 27 aufweisen, mit einem Hammerkopf 28 und einem, den Hammerkopf 28 mit der Vertikalstirnfläche 8 verbindenden, gegenüber dem Hammerkopf 28 querschnittsreduzierten Hals 29.

Diesbezüglich sind insbesondere im Hinblick auf den Hammerkopf 28 auch andere Ausgestaltungen möglich. So kann beispielsweise eine Pilzkopfausgestaltung (bezogen auf den Querschnitt) vorliegen oder auch ein Doppel-Hammerkopf. Die Steckausnehmungen 10 sind dann entsprechend, das heißt mit einer solchen Größe ausgebildet, dass ein Einstecken und dann Verschieben auch bei solcher Gestaltung ohne Weiteres ermöglicht ist. Abweichend von einem Einstecken und Verschieben kann auch ein ledigliches Einstecken etwa bei einem Pilzkopf möglich sein, wobei dann der Zusammenhalt im Wesentlichen (nur) durch Reibschluss gegeben ist.

Gemäß den dargestellten Ausführungsbeispielen kann sich der Vorsprung 27 zumindest annähernd über die gesamte Höhe h erstrecken, dies gegebenenfalls durchlaufend, alternativ aber auch regelmäßig oder unregelmäßig unterbrochen.

Der hammerartige Vorsprung 27 dient zum Eingriff in eine gegenüberliegend zu den hakenförmigen Steckausformungen 9 ausgebildete Ausnehmung 30 des Leistenteils 26. Diese Ausnehmung 30 erstreckt sich im Wesentlichen auch über die gesamte Höhe h, welche bezüglich des Leistenteils 26 bevorzugt dieselbe ist wie die Höhe h der Stirnwand 4, 5.

Die Ausnehmung 30 ist entsprechend nutartiger Gestalt mit einem den Hammerkopf 28 in der Verbindungsstellung aufnehmenden, querschnittserweiterten Abschnitt 31 und einen von diesem Abschnitt 31 in Richtung auf die freie vertikale Stirnfläche gerichteten schlitzartigen Verbindungsbereich 32, durch welchen in der Steckzuordnungsstellung der Hals 29 des Vorsprunges 27 taucht.

Wie weiter vorne schon angemerkt, kann im Hinblick auf andere Gestaltungen als ein Hammerkopf 28 auch die Ausnehmung 30 entsprechend angepasst vorgesehen sein.

Um das Leistenteil 26 an der Stirnwand 4 zu haltern, kann das Leistenteil 26 derart über den zugewandten Vorsprung 27 der Stirnwand 4, 5 geschoben werden, dass der Vorsprung 27 in der Ausnehmung 30 des Leistenteils 26 aufgenommen wird. Es ist eine Art Nut-Feder-Verbindung gegeben.

Um auch insbesondere diesen Aufschiebevorgang zu erleichtern, ist die Ausnehmung 30 über deren Längserstreckung betrachtet nicht durchgehend beidseitig flankiert. Vielmehr sind über die Höhe h eines Leistenteils 26 mit Bezug auf die nutartige Ausnehmung 30 wechselseitig der Ausnehmung 30 Ausbrüche 33 vorgesehen, so dass über die Erstreckungslänge der Ausnehmung 30 beziehungsweise über die Höhe des Leistenteils 26 betrachtet die Ausnehmung 30 immer nur einseitig flankiert ist. Durch den in der Ausnehmung 30 über die gesamte Höhe h einliegenden, bevorzugt durchlaufenden Vorsprung 27 ist eine stabile Steckverbindung erreichbar.

Wie ersichtlich, können die Leistenteile 26 in Bezug auf den Zusammenbauzustand unterschiedliche Längen b aufweisen, zur Ermöglichung einer entsprechend gewünschten Konfiguration des Wannenträgers 1. So sind beispielsweise die Leistenteile 26` in der Ausführungsform 16 mit einer größeren Teillänge b` ausgebildet als die Leistenteile 26 gemäß den Darstellungen in den Figuren 9 bis 14.

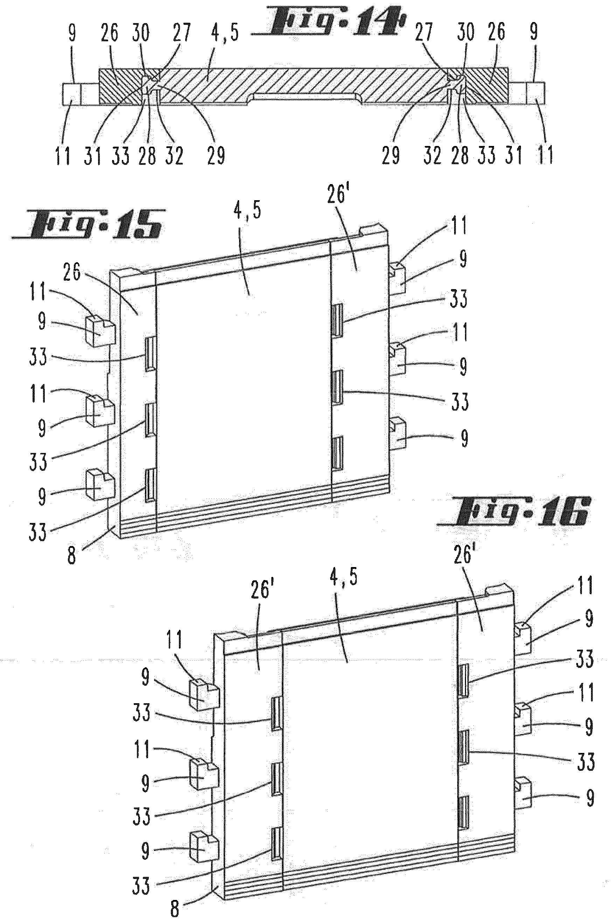

Wie weiter beispielsweise aus der Darstellung in Figur 15 zu erkennen, kann auch eine Kombination von kurzem Leistenteil 26 im Bereich des einen Endes der Stirnwand 4, 5 und längerem Leistenteil 26' im Bereich des gegenüberliegenden Endes vorgesehen sein.

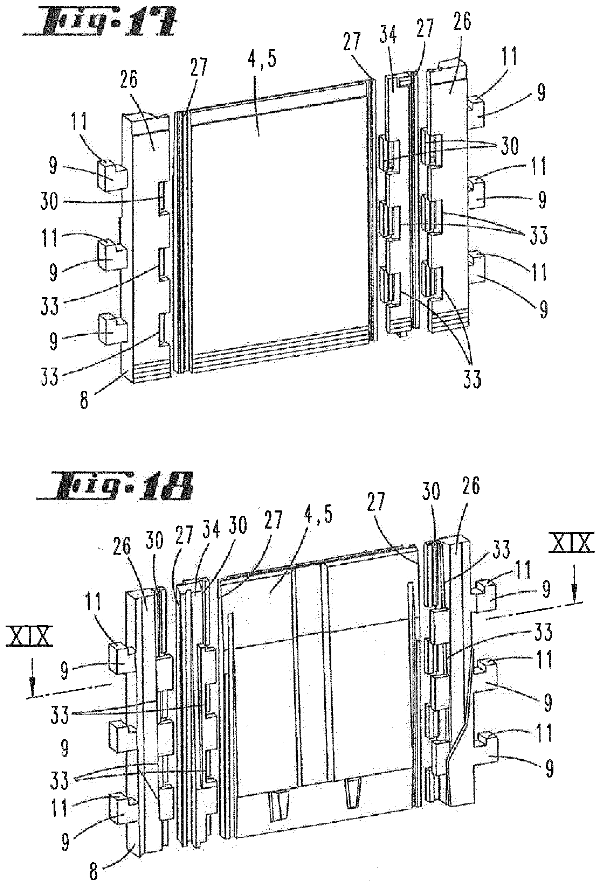

Auch kann gemäß den in den Figuren 17 bis 25 dargestellten weiteren Ausführungsbeispielen die Länge b der Stirnwände 4, 5 bei jeweiliger Nutzung von Leistenteilen 26 unter Zwischenschaltung von ergänzenden Leistenteilen 34 verändert werden. Diese Leistenteile 34 können, wie auch dargestellt, nicht geeignet sein zur unmittelbaren Zusammenwirkung mit den Seitenwänden 2, 3, insbesondere mit deren Steckausformungen 9. Vielmehr werden diese bei Bedarf zwischen der Stirnwand 4, 5 beziehungsweise deren Vertikalstirnfläche 8 und dem die hakenförmigen Steckausformungen 9 aufweisenden Leistenteil 26 angeordnet. Das Leistenteil 34 wirkt in Art eines Adapterteils, wobei im Bereich der im Zusammenbauzustand dem stirnwandseitigen Vorsprung 27 zugewandten Stirnfläche dieses Leistenteil 34 eine Ausnehmung 30 gemäß den Leistenteilen 26 beziehungsweise 26' aufweist und dieser Ausnehmung 30 gegenüberliegend, dem zu halternden Leistenteil 26 zugewandt, einen hammerkopfartigen, bevorzugt durchlaufenden Vorsprung 27 vorgesehen sein kann.

Die Anordnung eines solchen adapterförmigen Leistenteils 34 an der Stirnwand 4, 5 erfolgt in gleicher Weise wie die unmittelbare Anordnung eines Leistenteils 26 an der Stirnwand 4, 5, wie auch die Anordnung des Leistenteils 26 an einem Leistenteil 34 entsprechend durchgeführt wird.

Wie aus den Darstellungen zu entnehmen, kann ein solches adapterartiges Leistenteil 34 einseitig oder auch beidseitig der jeweiligen Vertikalstirnfläche 8 zugeordnet der Stirnwand 4, 5 angeordnet sein.

In dieser Konfiguration sind die Leistenteile 26 beziehungsweise 26' zwingend zur Ermöglichung einer Steckverbindung zwischen Stirnwand 4, 5 und Seitenwand 2, 3. Die Längenanpassung der Stirnwände 4, 5 - bezogen auf den Zusammenbauzustand - erfolgt entweder durch Anordnung unterschiedlich langer Leistenteile 26 oder 26' und/oder durch Zwischenschalten der Leistenteile 34. Hierbei können durchaus auch in der Länge der Stirnwand 4, 5 betrachtet mehrere Leistenteile 34 hintereinander angeordnet werden, um so eine noch größere Länge der zu erstellenden Stirnwand 4, 5 zu erreichen.

Auch ist in diesem Zusammenhang eine weitere Variabilität möglich durch Nutzung unterschiedlich lang gebildeter Leistenteile 26 und 26' in Verbindung mit den Leistenteilen 34, wobei weiter auch bezüglich der Länge im Zusammenbauzustand auch unterschiedlich lange Leistenteile 34 vorliegen können.

In den Darstellungen sind die Längen der Leistenteile 26, 26' und 34 in Anlehnung an das gesamte Längserstreckungsmaß b der Stirnwände 4, 5 mit b` bezeichnet.

Die Unteransprüche charakterisieren, auch ohne die Merkmale eines in Bezug genommenen Anspruchs, mit ihren Merkmalen eigenständige Weiterbildungen des Standes der Technik, insbesondere um auf Basis dieser Ansprüche Teilanmeldungen vorzunehmen, was allerdings keinen Teil dieser Erfindung darstellt. Die in jedem Anspruch angegebene Erfindung kann zusätzlich ein oder mehrere der in der vorstehenden Beschreibung, insbesondere mit Bezugsziffern versehene und/oder in der Bezugsziffernliste angegebene Merkmale aufweisen, solange dies nicht den Schutzumfang der Erfindung verlässt, der nur durch die beigefügten Ansprüche definiert wird. Die Erfindung betrifft auch Gestaltungsformen, bei denen einzelne der in der vorstehenden Beschreibung genannten Merkmale nicht verwirklicht sind, insbesondere soweit sie erkennbar für den jeweiligen Verwendungszweck entbehrlich sind oder durch andere technisch gleichwirkende Mittel ersetzt werden können, solange dies nicht den Schutzumfang der Erfindung verlässt, der nur durch die beigefügten Ansprüche definiert wird.

Ergänzend sei darauf hingewiesen, dass "umfassend" und "aufweisend" keine anderen Elemente oder Schritte ausschließt und die unbestimmten Artikel "eine" oder "ein" keine Vielzahl ausschließen. Bezugszeichen in den Ansprüchen sind nicht als Einschränkungen anzusehen.

### Liste der Bezugszeichen

| | | | |
|---|---|---|---|
| 1 | Wannenträger | 28 | Hammerkopf |
| 2 | Seitenwand | 29 | Hals |
| 3 | Seitenwand | 30 | Ausnehmung |
| 4 | Stirnwand | 31 | Abschnitt |
| 5 | Stirnwand | 32 | Verbindungsbereich |
| 6 | Gebäudeboden | 33 | Ausbruch |
| 7 | Vorsprung | 34 | Leistenteil |
| 8 | Vertikalstirnfläche | 35 | Nut |
| 9 | Steckausformung | | |
| 10 | Steckausnehmung | a | Längserstreckungsmaß |
| 11 | Haken | b | Längserstreckungsmaß |
| 12 | Stirnfläche | b' | Längserstreckungsmaß |
| 13 | Stirnfläche | c | Erstreckungsmaß |
| 14 | vertikaler Freiraum | d | Dicke |
| 15 | Reihe | d' | Dicke |
| 16 | Bodenabstützteil | e | Abstand |
| 17 | Rahmenkörper | h | Höhe |
| 18 | Stützteil | r | Steckrichtung |
| 19 | Öffnung | u | Höhe |
| 20 | Wannenform | v | Höhe |
| 21 | Verbindungsmittel | | |
| 22 | Halterungsvorsprung | E | Auflageebene |
| 23 | Versandanordnung | L₁ | erste Lage |
| 24 | Halterungssteg | L₂ | zweite Lage |
| 25 | Halterungsausformung | L₃ | dritte Lage |
| 26 | Leistenteil | L₄ | vierte Lage |
| 27 | Vorsprung | | |
| 26' | Leistenteil | | |
| 100 | Einbauprotokollerstellungseinrichtung | | |
| 101 | Sensorvorrichtung | | |
| 102 | Steuereinheit | | |
| 103 | Speichereinheit | | |
| 104 | Kommunikationsschnittstelle | | |
| 105 | Ausgabeeinrichtung | | |
| 106 | Server | | |

## Patentansprüche

1. Einbauprotokollerstellungseinrichtung (100), eingerichtet zur Erstellung eines Einbauprotokolls eines Wannenträgers (1), insbesondere eines Badewannenträgers und/oder Duschwannenträgers, aufweisend:
eine Sensorvorrichtung (101), eingerichtet zur Erfassung von geometrischen Einbaubedingungen des Umfelds der geplanten Einbauposition des Wannenträgers und zur Erfassung von Einbaudaten des danach eingebauten Wannenträgers;
eine Steuereinheit (102), eingerichtet zur Erstellung des Einbauprotokolls des Wannenträgers unter Verwendung der erfassten Einbaudaten;
eine Speichereinheit (103), eingerichtet zum Speichern des Einbauprotokolls.

2. Einbauprotokollerstellungseinrichtung (100) nach Anspruch 1, ausgeführt als Handgerät.

3. Einbauprotokollerstellungseinrichtung (100) nach einem der vorhergehenden Ansprüche,
wobei die Steuereinheit (102) eingerichtet ist, unter Verwendung der geometrischen Einbaubedingungen des Umfelds der geplanten Einbauposition des Wannenträgers einen Bauplan und/oder einen Einbauablaufplan, insbesondere eine Einbauanleitung, des Wannenträgers zu erstellen und auszugeben.

4. Einbauprotokollerstellungseinrichtung (100) nach einem der vorhergehenden Ansprüche,
wobei die Speichereinheit (103) entfernt von der Sensorvorrichtung (101) angeordnet ist;
weiterhin aufweisend eine Kommunikationsschnittstelle (104), eingerichtet zur Übermittlung des Einbauprotokolls an die Speichereinheit (103).

5. Einbauprotokollerstellungseinrichtung (100) nach einem der vorhergehenden Ansprüche,
wobei die Sensorvorrichtung (101) einen Laserscanner und/oder eine Kamera aufweist.

6. Einbauprotokollerstellungseinrichtung (100) nach einem der vorhergehenden Ansprüche, weiter aufweisend:
eine Ausgabeeinrichtung (105);
wobei die Steuereinheit (102) eingerichtet ist, unter Verwendung der geometrischen Einbaubedingungen des Umfelds der geplanten Einbauposition des Wannenträgers (1) eine Einbauanweisung zu erstellen und über die Ausgabeeinrichtung auszugeben.

7. Installations- und Dokumentationssystem (100, 106), aufweisend:
eine Einbauprotokollerstellungseinrichtung (100) nach einem der vorhergehenden Ansprüche;
einen externen Server (106), eingerichtet zum Speichern des Einbauprotokolls.

8. Verwendung einer Einbauprotokollerstellungseinrichtung (100) nach einem der vorergehenden Ansprüche 1 bis 6 zum Einbau eines Wannenträgers (1), einer bodenebenen Dusche, eines Wannenmontage-Fußgestells, eines oder mehrerer Wandelemente oder einer Ablaufmontagebox und zur Erstellung eines Einbauprotokolls des Wannenträgers (1), der bodenebenen Dusche, des Wannenmontage-Fußgestells, eines oder mehrerer Wandelemente oder der Ablaufmontagebox.

9. Verfahren zum Erstellen eines Einbauprotokolls eines Wannenträgers (1) mit einer Einbauprotokollerstellungseinrichtung (100) nach einem der Ansprüche 1 bis 6, aufweisend die Schritte:
Erfassen von geometrischen Einbaubedingungen des Umfelds der geplanten Einbauposition des Wannenträgers und Erfassen von Einbaudaten des danach eingebauten Wannenträgers mittels einer Sensorvorrichtung (101);
Erstellen des Einbauprotokolls unter Verwendung der erfassten Einbaudaten mittels einer Steuereinheit (102);
Speichern des Einbauprotokolls.

10. Programmelement, das, wenn es auf einer Steuereinheit (102) einer Einbauprotokollerstellungseinrichtung (100) nach einem der Ansprüche 1 bis 6 ausgeführt wird, die Einbauprotokollerstellungseinrichtung (100) anleitet, die folgenden Schritte durchzuführen:
Erfassen von geometrischen Einbaubedingungen des Umfelds der geplanten Einbauposition des Wannenträgers und Erfassen von Einbaudaten des danach eingebauten Wannenträgers mittels einer Sensorvorrichtung (101);
Erstellen des Einbauprotokolls unter Verwendung der erfassten Einbaudaten mittels einer Steuereinheit (102);
Speichern des Einbauprotokolls.

11. Computerlesbares Medium, auf dem ein Programmelement nach Anspruch 10 gespeichert ist.

## Claims

1. An installation protocol generation device (100), set up for generating an installation protocol for a tub support (1), in particular a bathtub support and/or shower tub support, comprising:
a sensor device (101), set up for detecting geometric installation conditions of the surroundings of the planned installation position of the tub support and detecting installation data of the tub support installed thereafter;
a control unit (102), set up for generating the installation protocol using the recorded installation data;
a storage unit (103), set up for storing the installation protocol.

2. The installation protocol generation device (100) according to claim 1, designed as hand-held device.

3. The installation protocol generation device (100) according to one of the preceding claims,
wherein the control unit (102) is set up to generate and output a construction plan and/or an installation schedule, in particular installation instructions, for the tub support using the geometric installation conditions surrounding the planned installation position of the tub support.

4. The installation protocol generation device (100) according to one of the preceding claims,
wherein the storage unit (103) is arranged remotely from the sensor device (101);
further comprising a communication interface (104), set up for transmitting the installation protocol to the storage unit (103).

5. The installation protocol generation device (100) according to one of the preceding claims,
wherein the sensor device (101) comprises a laser scanner and/or a camera.

6. The installation protocol generation device (100) according to one of the preceding claims, further comprising:
an output device (105);
wherein the control unit (102) is set up to generate installation instructions using the geometric installation conditions surrounding the planned installation position of the tub support (1) and to output them via the output device.

7. An installation and documentation system (100, 106), comprising:
an installation protocol generation device (100) according to one of the preceding claims;
an external server (106), set up for storing the installation protocol.

8. A use of an installation protocol generation device (100) according to one of the preceding claims 1 to 6 for installing a tub support (1), a floor-level shower, a tub mounting base frame, one or more wall elements or a drain mounting box and generating an installation protocol for the tub support (1), the floor-level shower, the tub mounting base frame, one or more wall elements or the drain mounting box.

9. A method for generating an installation protocol for a tub support (1) with an installation protocol generation device (100) according to one of the claims 1 to 6, comprising the steps:
Detecting geometric installation conditions of the surroundings of the planned installation position of the tub support and detecting installation data of the tub support installed thereafter by means of a sensor device (101);
Generating the installation protocol using the detected installation data by means of a control unit (102);
Storing the installation protocol.

10. A program element which, when executed on a control unit (102) of an installation protocol generation device (100) according to one of the claims 1 to 6, directs the installation protocol generation device (100) to carry out the following steps:
Detecting geometric installation conditions of the surroundings of the planned installation position of the tub support and detecting installation data of the tub support installed thereafter by means of a sensor device (101);
Generating the installation protocol using the detected installation data by means of a control unit (102);
Storing the installation protocol.

11. A computer-readable medium storing a program element according to claim 10.

## Revendications

1. Moyen d'établissement de protocole de montage (100), conçu pour établir un protocole de montage d'un support de bac sanitaire (1), en particulier d'un support de baignoire et/ou d'un support de bac à douche, présentant :
un dispositif de détection (101) conçu pour détecter les conditions géométriques de montage de l'environnement de la position de montage prévue du support de bac sanitaire et pour détecter les données de montage du support de bac sanitaire monté ensuite ;
une unité de commande (102) conçue pour établir le protocole de montage du support de bac sanitaire en utilisant les données de montage détectées ;
une unité de mémoire (103) conçue pour stocker le protocole de montage.

2. Moyen d'établissement de protocole de montage (100) selon la revendication 1, réalisé sous la forme d'un appareil portatif.

3. Moyen d'établissement de protocole de montage (100) selon l'une des revendications précédentes,
dans lequel l'unité de commande (102) est conçue pour établir et délivrer un plan de construction et/ou un organigramme de montage, en particulier une notice de montage, du support de bac sanitaire en utilisant les conditions géométriques de montage de l'environnement de la position de montage prévue du support de bac sanitaire.

4. Moyen d'établissement de protocole de montage (100) selon l'une des revendications précédentes,
dans lequel l'unité de mémoire (103) est disposée à distance du dispositif de détection (101) ;
présentant en outre une interface de communication (104) conçue pour transmettre le protocole de montage à l'unité de mémoire (103).

5. Moyen d'établissement de protocole de montage (100) selon l'une des revendications précédentes,
dans lequel le dispositif de détection (101) présente un scanner laser et/ou une caméra.

6. Moyen d'établissement de protocole de montage (100) selon l'une des revendications précédentes, présentant en outre :
un moyen de sortie (105) ;
dans lequel l'unité de commande (102) est conçue pour établir une instruction de montage en utilisant les conditions géométriques de montage de l'environnement de la position de montage prévue du support de bac sanitaire (1) et pour la délivrer via le moyen de sortie.

7. Système d'installation et de documentation (100, 106), présentant :
un moyen d'établissement de protocole de montage (100) selon l'une des revendications précédentes ;
un serveur externe (106) conçu pour stocker le protocole de montage.

8. Utilisation d'un moyen d'établissement de protocole de montage (100) selon l'une des revendications précédentes 1 à 6 pour monter un support de bac sanitaire (1), une douche de plain-pied, un piétement de montage de bac sanitaire, un ou plusieurs éléments muraux ou un boîtier de montage d'évacuation et pour établir un protocole de montage du support de bac sanitaire (1), de la douche de plain-pied, du piétement de montage de bac sanitaire, d'un ou plusieurs éléments muraux ou du boîtier de montage d'évacuation.

9. Procédé pour établir un protocole de montage d'un support de bac sanitaire (1) avec un moyen d'établissement de protocole de montage (100) selon l'une des revendications 1 à 6, présentant les étapes consistant à :
détecter les conditions géométriques de montage de l'environnement de la position de montage prévue du support de bac sanitaire et détecter les données de montage du support de bac sanitaire monté ensuite au moyen d'un dispositif de détection (101) ;
établir le protocole de montage en utilisant les données de montage détectées au moyen d'une unité de commande (102) ;
stocker le protocole de montage.

10. Élément de programme qui, lorsqu'il est exécuté sur une unité de commande (102) d'un moyen d'établissement de protocole de montage (100) selon l'une des revendications 1 à 6, amène le moyen d'établissement de protocole de montage (100) à effectuer les étapes suivantes :
détecter les conditions géométriques de montage de l'environnement de la position de montage prévue du support de bac sanitaire et détecter les données de montage du support de bac sanitaire monté ensuite au moyen d'un dispositif de détection (101) ;
établir le protocole de montage en utilisant les données de montage détectées au moyen d'une unité de commande (102) ;
stocker le protocole de montage.

11. Support lisible par ordinateur, sur lequel est stocké un élément de programme selon la revendication 10.
